# EUROPÄISCHE PATENTANMELDUNG

(11) **EP 2 005 824 A1**
(43) Veröffentlichungstag der Anmeldung: **24.12.2008**
(21) Anmeldenummer: 07012075.3
(22) Anmeldetag: 21.06.2007
(51) Int. Cl.: A01N 25/04, A01N 43/80

(54) **Wirkstoffsuspensionen in Glycerin**

(71) Anmelder: Bayer CropScience AG, 40789 Monheim (DE)
(72) Erfinder: Patel, Smita, Dr., 65817 Eppstein- Bremthal (DE); Baumgärtner, Joachim, 65931 Frankfurt am Main (DE)

(57) **Zusammenfassung**

Die vorliegende Erfindung betrifft Wirkstoffsuspensionen, enthaltend mindestens 60 Gew.-% Glycerin, agrochemische Wirkstoffe, Netzmittel, Dispergiermittel und Antischaummittel, sowie gegebenenfalls Mittel zum Einstellen rheologischer Eigenschaften, Säuren zum Einstellen eines pH-Wertes, Konservierungsmittel und weitere Komponenten wie Formuüerungshllfsmittel, Tenside und Lösungsmittel. Die Wirkstoffsuspensionen sowie die hieraus erhältlichen agrochemischen Mittel können zur Bekämpfung von schädlichen Organismen verwendet werden.

## Beschreibung

Die Erfindung betrifft das Gebiet des chemischen Pflanzenschutzes, insbesondere die Verwendung spezieller Suspensionskonzentrate für agrochemische Wirkstoffe sowie agrochemische Mittel enthaltend diese Suspensionskonzentrate.

Agrochemische Wirkstoffe für den Pflanzenschutz werden Im allgemeinen nicht in ihrer reinen Form eingesetzt. In Abhängigkeit von dem Anwendungsgebiet und der Anwendungsart, sowie von physikallschen, chemischen und biologischen Parametern wird der Wirkstoff in Mischung mit üblichen Hilfs- und Zusatzstoffen als Wirkstoffformulierung eingesetzt. Aber auch die Wirkstoffformullerung von Kombinationen (Mischungen) mit weiteren Wirkstoffen zur Erweiterung des Wirkungsspektrums und/oder zum Schutz der Kulturpflanzen, wie mit Safenem (Antidote), ist ein wichtiges Arbeitsgebiet der Formulierungstechnologie, da hier Wirkstoffe mit zum Teil recht unterschiedlichen physikalischen, chemischen und biologischen Parametern adäquat gemeinsam formuliert werden müssen.

Formulierungen von einzelnen Wirkstoffen, wie auch Formulierungen von Kombinationen mehrerer Wirkstoffe für den Pflanzenschutz sollten im allgemeinen eine gute Applizierbarkeit und Anwenderfreundlichkeit und eine breite biologische Wirkung mit hoher Selektivität im Hinblick auf die verwendeten Wirkstoffe aufweisen, neben einer technisch guten Formullerbarkeit im Herstellungsprozess. Von besonderer Bedeutung ist hierbei insbesondere eine hohe chemische und physikalische Stabilität (Lagerstabilität) in der Formullerung.

Geeignete Formulierungen mit denen die oben genannten Anforderungen für den Pflanzenschutzeinsatz realisiert werden können sind konzentrierte Suspensionen (Wirkstoffauspensionen), bei denen die Wirkstoffpartikel (diskontinuierliche Phase) in einer externen flüssigen Phase (kontinuierliche Phase) suspendiert werden. Je nach Beschaffenheit der externen Phase unterteilt man in Suspensionskonzentrate (Kurzbezeichnungen gemäß GCPF-Code, ehemals GIFAP-Code: SC), wobei der Hauptbestandteil der externen Phase Wasser ist, oder in Öldispersionen (Code: OD), wobei der Hauptbestandteil der externen Phase ein organisches Lösungsmittel ist. Die Auswahl der jeweiligen externen Phase wird häufig durch die Stabilität der jeweiligen Wirkstoffe bestimmt. Im allgemeinen werden in Wasser instabile Wirkstoffe als OD und in organischen Lösungsmitteln instabile Wirkstoffe als SC formuliert. Daneben existieren aber auch Wirkstoffe, die sich weder in Wasser noch in herkömmlichen organischen Lösungsmitteln stabil formulieren lassen. Für Formulierungen dieser Art von Wirkstoffen, insbesondere in Kombinationen mit weiteren Wirkstoffen, die jeweils eine unterschiedliche Stabilität in der externen Phase aufweisen, liegen aber noch keine überzeugenden Lösungen vor.

Hierzu gehören auch Versuche die herkömmlichen Lösungsmittel der externen Phase durch andere Flüssigkeiten zu ersetzen. So wird in US 2002/0065198 A1 als Flüssigkeit für die externe Phase Glykol (1,2-Propan-diol) in Konzentrationen von 20-80 Gew.% verwendet, in Verbindung mit einem spezifischen nicht-ionischen Tensid (Surfactant).

Aufgabe der Erfindung ist es daher, eine geeignete Flüssigkeit für die externe Phase von Wlrkstoffsuspensionen bereitzustellen, welches die vorteilhafte Formulierung agrochemischer Wirkstoffe, einzeln wie auch in Kombination, insbesondere im Hinblick auf die Lagerstabilität aller Wirkstoffe, ermöglicht.

Überraschenderwelse wurde nun gefunden, dass diese Aufgabe durch die Wirkstoffsuspensionen der vorliegenden Erfindung gelöst wird.

Gegenstand der Erfindung ist eine Wirkstoffsuspension, enthaltend:
(a) mindestens 60 Gew.-% Glycerin,
(b) ein oder mehrere agrochemische Wirkstoffe,
(c) ein oder mehrere Netzmittel,
(d) ein oder mehrere Dispergiermittel,
(e) ein oder mehrere Antischaummittel,
   und
(f) gegebenenfalls ein oder mehrere Mittel zum Einstellen rheologischer Eigenschaften,
(g) gegebenenfalls Säuren zum Einstellen eines pH-Wertes zwischen 2,5 bis 4,5,
(h) gegebenenfalls Konservierungsmittel (Biozide),
(i) gegebenenfalls weitere Formulierungshilfsmittel,
(j) gegebenenfalls weitere Tenside,
(k) gegebenenfalls weitere Lösungsmittel.

Im Folgenden bezieht sich die Angabe "Gew.-%" (Gewichtsprozent) in der gesamten Beschreibung, wenn nicht anders definiert, auf das relative Gewicht der Jeweiligen Komponente bezogen auf das Gesamtgewicht der Formulierung.

In einer bevorzugten Ausführungsform enthalten diese Wirkstoffsuspensionen
(a) 60 bis 90 Gew.-%, bevorzugt 70 bis 85 Gew.-% Glycerin,
(b) 0,1 bis 30 Gew.-%, bevorzugt 5 bis 20 Gew.-% agrochemische Wirkstoffe,
(c) 0,1 bis 20 Gew.-%, bevorzugt 1 bis 5 Gew.-% Netzmittel,
(d) 0,1 bis 20 Gew.-%, bevorzugt 1 bis 5 Gew.-% Dispergiermittel,
(e) 0,02 bis 2 Gew.-%, bevorzugt 0,2 bis 1,5 Gew.-% Antischaummittel,
(f) 0 bis 7 Gew.-%, bevorzugt 0,1 bis 4 Gew.-% Mittel zum Einstellen rheologischer Eigenschaften,
(g) 0 bis 3 Gew.%, bevorzugt 0,3 bis 1,5 Gew.% Säuren zum Einstellen eines pH-Wertes zwischen 2,5 bis 4,5,
(h) 0 bis 1 Gew.-%, bevorzugt 0,05 bis 0,4 Gew.-% Konservierungsmittel (Biozide),
(i) 0 bis 30 Gew.-%, bevorzugt 5 bis 15 Gew.-% weitere Formulierungshilfsmittel,
(j) 0 bis 10 Gew.-% weitere Tenside,
(k) 0 bis 30 Gew.-%, bevorzugt 0 bis 20 Gew.-%, besonders bevorzugt 0 bis 13 Gew.-% weitere Lösungsmittel.

Eine besonders bevorzugte Ausführungsform sind erfindungsgemäße Wirkstoffsuspensionen, worin enthalten sind
(a) 65 bis 85 Gew.-% Glycerin,
(b) 0,1 bis 2 Gew.-% Sulfonamid-Herbizid, vorzugsweise Thiencarbazone(-methyl),
(b) 1 bis 10 Gew.-% Herbizid, vorzugsweise Tembotrione,
(b) 0,5 bis 8 Gew.-% Safener, vorzugsweise Isoxadifen-ethyl,
(b) 0,5 bis 8 Gew.-% Safener, vorzugsweise Cyprosulfamide,
(c) 0,1 bis 8 Gew.-% Netzmittel, vorzugsweise ®Monatrope 1620 (AL2575),
(d) 0,3 bis 15 Gew.-% Dispergiermittel, vorzugsweise ®Dispersogen LFH,
(e) 0,1 bis 2 Gew.-% Antischaummittel, vorzugsweise ®Rhodorsil 481,
(f) 0,05 bis 3 Gew.-% Mittel zum Einstellen rheologischer Eigenschaften, vorzugsweise ®Rhodopol 23,
(f) 0.05 bis 3 Gew.-% Mittel zum Einstellen rheologischer Eigenschaften, vorzugsweise ®Aerosil 200,
(g) 0 bis 2 Gew.-% Säuren zum Einstellen eines pH-Wertes zwischen 2,5 bis 4,5, vorzugsweise Zitronensäure,
(h) 0 bis 1 Gew.-% Konservierungsmittel (Biozide), vorzugsweise ®Proxel GXL,
(i) 2 bis 10 Gew.-% weitere Formulierungshilfsmittel, vorzugsweise Ammoniumsulfat (techn.),
(k) 0 bis 13 Gew.-% weitere Lösungsmitteln vorzugsweise Wasser (entsaizt).

Eine weitere besonders bevorzugte Ausführungsform sind erfindungsgemäße Wirkstoffsuspensionen, worin enthalten sind
(a) 75 bis 90 Gew.-% Glycerin,
(b) 0,5 bis 3 Gew.-% Sulfonamid-Herbizid, vorzugsweise Thienearbazone(-methyl),
(b) 1 bis 10 Gew.-% Herbizid, vorzugsweise Isoxaflutole,
(b) 0,5 bis 10 Gew.-% Safener, vorzugsweise Cyprosulfamide,
(c) 0,1 bis 8 Gew.-% Netzmittel, vorzugsweise ®Atlox 4894,
(d) 0,3 bis 15 Gew.-% Dispergiermittel, vorzugsweise ®Atlox 4913,
(e) 0 bis 2 Gew.-% Antischaummittel, vorzugsweise ®Rhodorsil 481,
(f) 0 bis 7 Gew.-% Mittel zum Einstellen rheologischer Eigenschaften, vorzugsweise ®Kaolin W,
(g) 0 bis 2 Gew.-% Säuren zum Einstellen eines pH-Wertes zwischen 2,5 bis 4,5, vorzugsweise Zitronensäure,
(h) 0 bis 1 Gew.% Konservierungsmittel (Biozide), vorzugsweise ®Proxel GXL,
(h) 0 bis 1 Gew.-% Konservierungsmittel (Biozide), vorzugsweise ®Acticide MBS,
(k) 0 bis 13 Gew.-% weitere Lösungsmitteln vorzugsweise Wasser (entsalzt).

Für Glycerin (1,2,3-Propan-triol) als Komponente a) in den erfindungsgemäßen Formulierungen können alle dem Fachmann bekannten Formen sowie Bezugsquellen verwendet werden, z.B. von den Firmen Brenntag, Baerlocher, Fauth Chemie und Riedel de Häen.

Glycerin kann erfindungsgemäß mit jeglicher Reinheit und Konzentration verwendet werden.

Der Anteil an Glycerin in den erfindungsgemäßen Formulierungen (Komponente a) kann 60 bis 90 Gew.-%, bevorzugt 70 bis 85 Gew.-% betragen.

Als agrochemische Wirkstoffe (Komponente b) kommen alle Wirkstoffe in Frage, die sich aufgrund ihrer Beschaffenheit in den erfindungsgemäßen Wirkstoffsuspensionen formulieren lassen, d.h. entweder allein oder in Kombination als Wirkstoffpartikel in der diskontinuierlichen Phase mit einem mittleren Partikeldurchmesservon 1- 5 Mikron (d50 =1-5 µ) und/oder flüssig als Kombinationspartner in der externen flüssigen Phase (kontinuierliche Phase).

Vorzugsweise kommen als agrochemischen Wirkstoffe (Komponente b) alle Wirkstoffe in Frage aus der Gruppe der Herbizide und/oder Safener, deren biologische Wirksamkeit gegen Unkäuter im weiteren Sinne, im Folgenden auch als schädliche Pflanzen (Schadpflanzen) bezeichnet, wohingegen Safener Kulturpflanzen schützen bzw. stärken, und/oder aus der Gruppe der Insektizide und Fungizide, deren biologische Wirksamkeit gegen Insekten, Spinnenartige und Nematoden oder Pilze und Bakterien im weiteren Sinne, im Folgenden auch als schädliche Tiere (Schadtiere) und pflanzenpathogene Mikroorganismen (Schadpilze) bezeichnet. Schadpflanzen, Schadtiere und Schadpilze werden im Folgenden auch zusammenfassend als Schadorganismen bezeichnet.

Vorzugsweise genannt seien Wirkstoffe aus der Gruppe der Herbizide, umfassend auch Pflanzenwuchsregulatoren, und Safener; aus der Gruppe der Insektizide, umfassend auch Akarizide, Nematizide, Molluskizide, Rodentizide, Repellents; und aus der Gruppe der Fungizide, umfassend auch Bakterizide und Virizide, sowie Pflanzennährstoffe. Im folgenden beinhaltet der Begriff Herbizide sowohl Herbizide wie auch Pflanzenwuchsregulatoren, der Begriff Insektizide sowohl Insektizide wie auch Akarizide, Nematizide, Molluskizide, Rodentizide und Repellents und der Begriff Fungizide sowohl Fungizide wie auch Bakterizide und Virizide - soweit aus dem Zusammenhang nichts anderes hervorgeht. Beispiele für einzelne agrochemische Wirkstoffe aus den oben genannten Gruppen sind:

### Herbizide

Beispiele für Herbizide sind beispielsweise bekannte Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogsn-Oxldase, Glutamlne-Synthetase, Cellulosebiosynthese, 5-Enolpyruvylshikimat-3-phosphat. Synthetase beruhen, einsetzbar. Solche Verbindungen und auch andere ersetzbare Verbindungen mit teilweise unbekanntem oder anderem Wirkungsmechanismus sind z.B. in Weed Research 26, 441-445 (1986), oder in dem Handbuch "The Pesticide Manual". 12. Auflage 2000. oder 13. Auflage 2003 oder 14. Auflage 2006/2007, oder in dem entsprechenden "e-Pesticide Manual", Version 4 (2006), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide, die mit den Verbindungen der Formel (I) kombiniert werden können, sind z.B. folgende Wirkstoffe zu nennen (Anmerkung: Die Verbindungen, Herbizide wie Safener, sind entweder mit dem "common name" nach der International Organization for Standardlzation (ISO) oder mit dem chemischen Namen, ggf. zusammen mit einer üblichen Codenummer bezeichnet): acetochlor; acibenzolar-S-methyl; acifluorfen(-sodium); aclonifen; AD-67; AKH 7088, d.h. [[[11-[5-[2-Chioro-4-(tnftuoromethyl)-phenoxy]-2-nitrophenyl]-2-methoxyethylidene]-amino]-oxy]-essigsäure und -essigsäuremethylester; alachlor; alloxydim(-sodium); ametryn; amicarbazone, amidochlor, amidosulfuron; aminopyralid; amitrol; AMS, d.h. Ammoniumsulfamat; ancimidol; anilofos; asulam-, atrazin; aviglycine; azafenidin, azimsulfuron (DPX-A8947); aziprotryn; barban; BAS 516 H, d.h. 5-Fluor-2-phenyl-4H-3,1-benzoxazin-4-on; beflubutamid, benazolin(-ethyl); bencarbzone; benfluralin; benfuresate; benoxacor; bensulfuron(-methyl); bensulide; bentazone; benzfendizone; benzobicyclon, benzofenap; benzofluor; benzoylprop(-ethyl); benzthiazuron; bialaphos; bifenox; bispyribac(-sodium), borax; bromacil; bromobutide; bromofenoxim; bromoxynil(-octanoat); bromuron; buminafos; busoxinone; butachlor; butafenacil, butamifos; butenachlor, buthidazole; butralin; butroxydim, butylate; cafenstrole (CH-900); carbetamide; carfentrazone(-ethyl); caloxydim, CDAA, d.h. 2-Chlor N,N-di-2-propenylacetamid; CDEC, d.h. Diethyldlthlocarbamlnsäure-2-chlorallylester; chlomethoxyfen; chloramben; chlorazifop-butyl, chlorbromuron; chlorbufam; chlorfenac; chlorfenprop; chlorflurecol(-methyl); chlortlurenol(-methyl); chloridazon; chlorimuron(-ethyl); chlormequat(-chloride); chlormesulon (ICI-A0051); chlornitrofen; chlorotoluron; chloroxuron; chlorpropham; chlorsulfuron; chlorthal-dimethyl; chlorthlamid; chlortoluron, einidon(-methyl und -ethyl), cinmethylin; cinosulfuron; clefoxydim, clethodim; clodinafop und dessen Esterderivate (z.B. clodinafop-propargyl); clofencet; clomazone; clomeprop; cloproxydim; clopyralid; clopyrasulfuron(-methyl), cloquintocet(-mexyl); cloraneulam(-methyl), cumyluron (JC 940); cyanamide; cyanazine; cycloate; cyclosulfamuron (AC 104); cycloxydim; cycluron; cyhalofop und dessen Esterderivate (z.B. Butylester, DEH-112); cyperquat; cyprazine: cyprazole; cyprosulfamide; daimuron; 2.4-D. 2,4-DB; dalapon; daminozide; dazomet; n-decanol; desmedipham; desmetryn; di-allate; dicamba; dichlobenil; dichlormid; dlchlorprop(-P)-salze; diclofop und dessen Ester wie diclofop-methyl; diclofop-P(-methyl); diclosulam, diethatyl(-ethyl); difenoxuron; difenzoquat(-metilsulfate); diflufenican; diflufenzopyr, dimefuron; dimepiperate, dimethachlor; dimethametryn; dimethazone; dimethenamid (SAN-582H); dimethenamide-P; dimethylarsinic acid; dimexyflam, dimethipin; dimetrasulfuron, dinitramine; dinoseb; dinoterb; diphenamid; dipropetryn; diquat-salze; dithiopyr; diuron; DNOC; eglinazine-ethyl; EL 77, d.h. 5-Cyano-1-(1,1-dimethylethyl)-N-methyl-1H-pyrazole-4-corboxamid; endothal; epoprodan, EPTC; esprocarb; ethalfluralin; ethametsulfuron-methyl; ethidimuron; ethiozin; ethofumesate; ethoxyfen und dessen Ester (z.B. Ethylester, HN-252); ethoxysulfuron, etobenzanid (HW 52); F5231, d.h. N-[2-Chlor-4-fluor-5-[4-(3-fluorpropyl)-4,5-dihydro-5-oxo-1H-tetraml-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenaxaprop-ethyl; fenoxydim; fentrazamide, fenuron; ferrous sulfate; flamprop(-methyl oder -isopropyl oder -isopropyl-L); flamprop-M(-methyl oder -isopropyl); flazasulfuron; florasulam, fluazifop und fluazifop-P und deren Ester, z.B. fluazifop-butyl und fluazifop-P-butyl; fluazolate, flucarbazone(-sodium), flucetosulfuron; fluchloralin; flufenacet; flufenpyr(-ethyl); flumetralin; flumetsulam; flumeturon; flumiclorac(-pentyl), flumioxazin (S-482); flumipropyn; fluometuron, fluorochloridone, fluorodifen; fluoroglycofen(-ethyl); flupoxam (KNW-739); flupropacil (UBIC-4243); flupropanoate; flupyrsulfuron(-methyl)(-sodium); flurazole; flurenol(-butyl); fluridone; flurochloridone; fluroxypyr(-meptyl); flurprimidol, flurtamone; fluthiacet(-methyl), fluthiamide, fluxofenim; fomesafen; foramsulfuron, forchlorfenuron; fosamine; furilazole; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; imazamethabenz(-methyl); Imazamethapyr, imazamox, Imazapic, imazapyr, imazaquin und Salze wie das Ammoniumsalz; imazethamethapyr; imazethapyr; imazosulfuron; inabenfide; indanofan; indol-3-acetic acid; 4-indot-3-ylbutyric acid; iodosulfuron-methyl(-sodium); loxynil(-octanoat); isocarbamid; isopropalin; isoproturon; isouron; isoxaben; isoxachlortole, isoxadffen(-ethyl), isoxaflutole, isoxapyrifop; karbutilate; lactofen; lenacil; linuron; MCPA; MCPB; mecoprop(-P); mefenacet; mefenpyr(-diethyt); mefluidid; mepiquat(-chloride); mesosulfuron(-methyl); mesotrione, metam; metamifop; metamitron; metazachlor; methabenzthiazuron; metham; methazole; methoxyphenone; methylarsonic acid; methyl-cyclopropene; methyldymron; methylisothiocyanate; methabenzthiazuron; metobenzuron; metobromuron; (alpha-)metolachlor, metosulam (XRD 511); metoxuron; metribuzin; metsulfuron-methyl; MH; MK-616; molinate; monalide; monocarbamide dihydrogensulfate; monolinuron; monuron; MT 128, d.h. 6-Chlor-N-(3-chlor-2-propenyl)-5-methyl-N-phenyl-3-pyridenamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrophenolate mixture; nitrofluorfen; nonanoic acid; norflurazon; orbencarb; orthasulfamuron; oxabetrinil; oryzalin; oxadiargyl (RP-020630); oxadiazon; oxasulfuron, oxaziclomefone, oxyfluorfen; paclobutrazol; paraquat(-dichloride); pebulate; pelargonic acid, pendimethalin; penoxulam; pentachlorophenol; pentanochlor; pentoxazone, perfluidone; pethoxamid; phenisopham; phenmedipham; picloram; picolinafen, pinoxaden, piperophos; piributicarb; pirifenop-butyl; pretilachlor; primisulfuron(-methyl); probenazole; procarbazone-(sodium), procyazine; prodiamine; profluralin; profoxydim; prohexadione(-calcium); prohydrojasmon; proglinazine(-ethyl); prometon; prometryn; propachlor; propanil; propaquizafop; propaxine; propham; propisochlor; propoxycarbazone(-sodium); n-propyl-dihydrojasmonate; propyzamide; prosulfalin; prosulfocarb; prosulfuron (CGA-152005); prynachlor, pyraclonil; pyraflufen(-ethyl), pyrasulfotole; pyrazolynate; pyrazon; pyrazosulfuron(-ethyl); pyrazoxyfen; pyribenzoxim, pyributicarb, pyridafol, pyridate; pyriftalid; pyriminobac(-methyl), pyrimisulfan; pyrithiobac(-sodium) (KIH-2031); pyroxasulfone; pyroxofop und dessen Ester (z.B. Propargytester); pyroxulam; quinclorac; quinmerac; quinoclamine, quinofop und dessen Esterderivate, quizalofop und quizalofop-P und deren Esterderivate z.B. quizalofop-sthyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluor-methyl)-phenoxy]-2-naphthalenyl]-oxy]-propansäure und -methylester; sulcotrione, sulfentrazone (FMC-97285, F-6285); sulfazuron; sulfometuron(-methyl); sulfosate (ICI-A0224); sulfosulfuron, TCA; tebutam (GCP-5544); tebuthiuron; tecnacene; tembotrione; tefuryltrione; tepraloxydim, terbacil; terbucarb; terbuchlor; terbumeton; terbuthylazine; terbutryn; TFH 450, d.h. N,N-Diethyl-3-[(2-ethyl-6-methylphenyl)-sulfonyl)-1H-1,2,4-triazol-1-carboxamld; thenylchlor (NSK-850); thiafluamlde, thiazafluron; thiazopyr (Mon-13200); thidiazimin (SN-24085); thiencarbazone(-methyl); thifensulfuron(-methyl); thiobencarb; Ti 35; tiocarbazil; topramezone; tralkoxydim; tri-allate; triasulfuron; triaziflam, triazofenamide; tribenuron(-methyl); triclopyr; tridiphane; trietazine; trifloxysulfuron; trifluralin; triflusulfuron und Ester (z.B. Methylester, DPX-66037); trimeturon; trinexapac; tritosulfuron, tsitodef; uniconazole; vernolate; WL 110547, d.h. 5-Phenoxy-1-[3-(trlfluormethyl)-phenyl]-1H-tetrazol; BAY MKH 6561, UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127, KIH-2023, KIH-5996 und KIH-485.

Bevorzugt sind von den oben genannten herbiziden Wirkstoffen, Verbindungen aus der Gruppe der "Sulfonamide", vorzugsweise Phenylsulfonamide, wie Phenylsulfonylaminocarbonyltriazolinone oder Phenylsulfonylhamstoffe, Heteroarylsulfonamide und sonstige Sulfonamide wie Cyclosulfamuron oder (Alkylsulfonyl)alkylamino-sulfonamide wie Amidosulfuron, sowie deren Salze. Als Phenylsulfonamide kommen bevorzugt Verbindungen aus der Gruppe der Phenylsulfonylamlnocarbonyltriazolinone oder der Phenylsulfonylharnstoffe in Frage. Unter dem Begriff Phenylsulfonylhamstoffe werden auch solche Sulfonylharnstoffe verstanden, bei denen die Phenylgruppe über einen Spacer wie CH₂, O oder NH an die Sulfongruppe (SO₂) gebunden Ist. Beispiele für Phenylsulfonylaminocarbonyltriazolinone sind Flucarbazone, Propoxycarbazone oder Methyl-4-[(4,5-dihydro-3-methoxy-4-methyl-5-oxo-1H-1,2,4-thazol-1-yl)carboxamidosulfonyl]-5-metylthiophen-3-carboxylat (z.B. bekannt aus WO-A-03/026427, Beispiel I-2) und/oder deren Salze. Die Sulfonamide sind kommerziell erhältlich und/oder nach bekannten Verfahren herstellbar wie sie z.B. beschrieben sind in EP-A-7687, EP-A-30138, US 5,057,144 und US 5,534,486.

Als Phenylsulfonamide kommen beispielsweise Phenylsulfonamide der allgemeinen Formel (I) und/oder deren Salze in Frage,

R^{α}-(A)ₘ-SO₂-NR^{β}-CO-(NR^{γ})ₙ-R^{δ} (I)

worin
- R^{α}: ein Phenylrest Ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₈-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O ist,
- m: gleich Null oder 1,
- n: gleich Null oder 1, vorzugsweise gleich 1, und
- R^{δ}: ein heterocyclischer Rest wie ein Pyrimidinylrest, ein Triazinylrest oder ein Triazollnonrest ist.

Bevorzugte Phenylsulfonamide sind Phenylsulfonylhamstoffe, beispielsweise Phenylsulfonylhamstoffe der allgemeinen Formel (II) und/oder deren Salze,

R^{α}-(A)ₘ-SO₂-NR^{β}-CO-NR^{γ} - R^{δ} (II)

worin
- R^{α}: ein Phenylrest ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest Ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1, und
- R^{δ}: ein heterocyclischer Rest wie ein Pyrimidinylrest oder ein Triazinylrest ist.

Bevorzugt sind Phenylsuifönylhamstoffe der Formel (III) und/oder deren Salze, 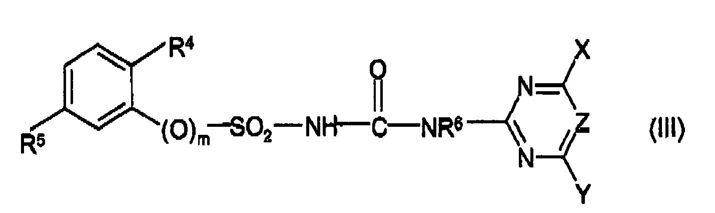 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: Halogen, vorzugsweise lod, oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acylrest wie Formyl oder C₁-C₄-Alkyl-Sulfonyl ist, und R⁵ für den Fall, dass R⁴ gleich C₁-C₄-Alkoxy, vorzugsweise C₂-C₄-Alkoxy, bedeutet auch H sein kann,
- R⁶: H oder C₁-C₄-Alkyl ist,
- m: gleich Null oder 1 ist,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy, und
- Z: gleich CH oder N ist.

Besonders bevorzugt sind Phenylsulfonylhamstoffe der allgemeinen Formel (III) und/oder deren Salze, worin
a) R⁴ gleich CO-(C₁-C₄-Alkoxy) Ist, R⁵ gleich Halogen, vorzugsweise Jod ist, oder R⁵ gleich CH₂-NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist.

Typische Phenylsulfonylhamstoffe sind unter anderem die nachfolgend aufgeführten Verbindungen und deren Salze wie die Natriumsalze: Bensulfuron-methyl, Chlorimuron-ethyl, Chlorsulfuron, Cinosulfuron, Cyclosulfamuron, Ethametsulfuron-methyl, Ethoxysulfuron und dessen Natriumsalz, Metsulfuron-methyl, Oxasulfuron, Primisutfuron-methyl, Prosulfuron, Sutfometuron-methyl, Triasulfuron, Tribenuron-methyl, Triflusulfuron-methyl, Tritosulfuron, lodosulfuron-methyl und dessen Natriumsalz (WO-A-92/13845), Mesosulfuron"methyl und dessen Natriumsalz (Agrow Nr. 347, 3. März 2000, Seite 22 (PJB Publications Ltd. 2000)) und Foramsulfuron und dessen Natriumsalz (Agrow Nr. 333, 15. Oktober 1999, Seite 26 (PJB Publications Ltd. 1999)).

Besonders bevorzugte Phenylsulfonamide sind: lodosuffuron-methyl und dessen Natriumsalz, Mesosuffuron-methyl und dessen Natriumsalz, Foramsulfuron und dessen Natriumsalz, Flucarbazone und dessen Natriumsalz, Propoxycarbazone und dessen Natriumsalz, Mothyl-4-[(4,5-dihydro-3-methoxy-4-methyl-5-oxo-1H-1,2,4-triazol-1-yl)carboxamidosulfonyl]-5-metylthiophen-3-carboxylat und dessen Natriumsalz, und Ethoxysulfuron und dessen Natriumsalz, Metsulfuron-methyl und dessen Natriumsalz, Tribenuron-methyl und dessen Natriumsalz, Chlorsulfuron und dessen Natriumsalz.

Als Heteroarylsulfonamide kommen beispielsweise Verbindungen aus der Gruppe der Heteroarylsulfonylaminocarbonyltriazolinone oder der Heteroarylsulfonylharnstoffe, bevorzugt aus der Gruppe der Heteroarylsulfonylhamstoffe in Frage. Unter dem Begriff Heteroarylsulfonylhamstoffe werden auch solche Sulfonylharnstoffe verstanden, bei denen die Heteroarylgruppe über einen Spacer wie CH₂, O oder NH an die Sulfongruppe (SO₂) gebunden ist.

Als Heteroarylsulfonamlde kommen beispielsweise Sulfonamide der allgemeinen Formel (IV) und/oder deren Salze in Frage,

R^{α'}-(A')_{m'}-SO₂-NR^{β'}-CO-(NR^{γ'})_{n'}- R^{δ'} (IV)

worin
- R^{α}: ein Heteroarylrest ist, der unsubstituiert oder substituiert Ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1,
- n': gleich Null oder 1, vorzugsweise gleich 1, und
- R^{δ'}: ein heterocyclischer Rest wie ein Pyrimidinylrest, ein Triazinylrest oder ein Triazolinonrest ist.

Bevorzugte Heteroarylsulfonamide sind Heteroarylsulfonylharnstoffe, beispielsweise Sulfonylharnstoffe der allgemelnen-Formel (V) und/oder deren Salze,

R^{α'}-(A')_{m'}-SO₂-NR^{β'}-CO-NR^{γ'} - R^{δ'} (V)

worin
- R^{a}: ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ'}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1, und
- R^{δ'}: ein heterocyclischer Rest wie ein Pyrimidinylrest oder ein Triazinylrest ist.

Besonders bevorzugt sind Heteroarylsulfonamide der nachfolgend genannten Formel (VI),

R^{ω}-SO₂- NH-CO-(NR^{γ'})_{n'}-R^{δ'} (VI)

worin
- R^{α'}: ein substituierter Heteroarylrest, wie substituiertes Pyridyl, Thienyl, Pyrazolyl oder Imidazolyl,
- R^{γ'}: H, (C₁-C₃)Alkyl, optional substituiert mit Halogen (F, C, Br, I) oder (Halo)Alkoxy (C₁-C₃), bevorzugt H oder Methyl,
- für n': gleich 1, R^{δ'} ein Pyrimidinylrest oder ein Triazinylrest ist, vorzugsweise 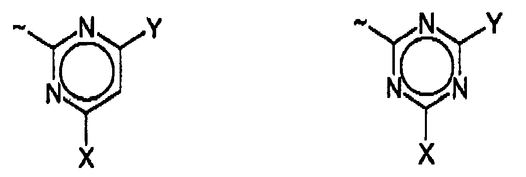 und für n' gleich Null, R^{δ'} ein Triazolinonrest ist, vorzugsweise 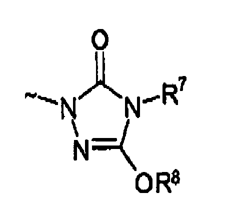
- R⁷: (C₁-C₁₀)Alkyl, welches optional substituiert ist mit Halogen (F, CI, Br, I) oder (C₁-C₃)Halo.Alkyl.
- R⁸: (C₁-C₁₀)Alkyl, welches optional substituiert ist mit Halogen (F, Cl, Br, I) oder (C₁-C₃)Halo-Alkyl,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₈-Alkylthio, C₃-C₆-Cycloalkyl. C₂-C₆-Alkenyl, C₂-C₉-Aikynyi, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy.

Besonders bevorzugt Ist R^{α'} gleich 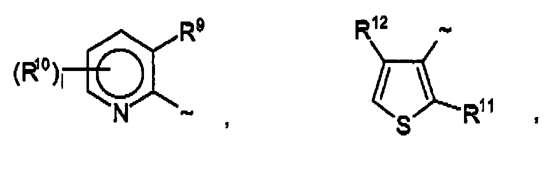 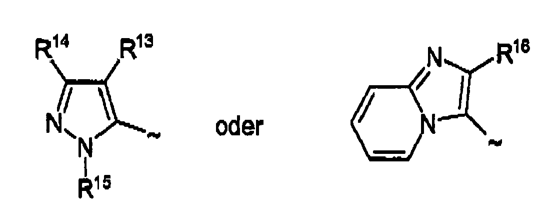 , worin
- R⁸: (C₁-C₆)Alkyl, (C₁-C₈)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, CONR'R", (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl,
- R¹⁰: H, (C₁-C₃)Alkyl, (C₁-C₃)Alkoxy, (C₁-C₃)Halo-Alkyl, (C₁-C₃)Halo-Alkoxy oder Halogen (F, Cl, Br, I),
- I: Null oder 1,
- R¹¹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl. (C₁-C₆)Halo-Alkoxycarbonyl. (C₂-C₆)Halo-Alkenyloxycarbonyl, (C₂-C₆)Halo-Alkinyloxycarbonyl, CONR'R",
- R¹²: Halogen (F, Cl, Br, I), (C₁-C₆)Alkyl, (C₁-C₆)Alkoxy, (C₁-C₆)Alkylsulfonyl, (C₁-C₆)Alkoxycarbonyl, (C₂-C₆)Alkenyloxycarbonyl. (C₂-C₆)Alkinyloxycarbonyl, (C₁-C₆)Halo-Alkyl, (C₁-C₈)Halo-Alkoxy, (C₁-C₆)Halo-Alkylsulfonyl, (C₁-C₆)Halo-Alkoxycarbonyl, (C₂-C₆)Halo-Alkenyloxycarbonyl, (C₂-C₆)Halo-Alkinyloxycarbonyl,
- R¹³: (C₁-C₆)Alkoxycarbonyl, (C₂-C₆)Alkenyloxycarbonyl, (C₂-C₈)Alkinyloxycarbonyl, (C₁-C₆)Alkyl, (C₁-C₆)Alkoxy, (C₁-C₆)Alkylsulfonyl, (C₁-C₆)Halo-Alkoxycarbonyl, (C₂-C₆)Halo-Alkenyloxycarbonyl, (C₂-C₆)Halo-Alkinyloxycarbonyl, (C₁-C₆)Halo-Alkyl, (C₁-C₆)Halo-Alkoxy, (C₁-C₆)Halo-Alkylsulfonyl, Halogen (F, Cl, Br, I), CONR'R", oder R¹³ ist ein heterocyclischer Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann, besonders bevorzugt 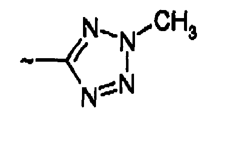
- R¹⁴: H, Halogen (F, C, Br, I), (C₁-C₆)Alkyl, (C₁-C₆)Halo-Alkyl,
- R¹⁵: H, (C₁-C₆)Alkyl, (C₁-C₆)Halo-Alkyl,
- R¹⁶: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylaulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R", insbesondere SO₂Ethyl, und
- R' und R": unabhängig voneinander H, (C₁-C₆)Alkyl, (C₁-C₆)Haloalkyl, (C₂-C₆)Alkenyl, (C₂-C₆)Haloalkenyl, (C₂-C₆)Alkinyl, (C₂-C₆)Haloalkinyl sind, oder NR'R" bildet einen heterocyclischen Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann.

Besonders bevorzugte Heteroarylsulfonylhamstoffe sind z.B. Nicosulfuron und dessen Salze wie das Natriumsalz, Rimsulfuron und dessen Salze wie das Natriumsalz, Thifensulfuron-methyl und dessen Salze wie das Natriumsalz, Pyrazosulfuron-ethyl und dessen Salze wie das Natriumsalz, Flupyrsulfuron-methyl und dessen Salze wie das Natriumsalz, Sulfosulfuron und dessen Salze wie das Natriumsalz, Trifloxysulfuron und dessen Salze wie das Natriumsalz, Azimsulfuron und dessen Salze wie das Natriumsalz, Flazasulfuron und dessen Salze wie das Natriumsalz und Flucetosulfuron (1-[3-[[[[(4,6-dimethoxy-2-pyrimidinyl)amino]carbonyl]amino]sulfonyl]-2-pyridinyl]-2-fluoropropyl methoxyacetat) und dessen Salze wie das Natriumsalz.

Unter den in den erfindungsgemäßen Formulierungen enthaltenen Sulfonamiden (Komponente b) werden im Sinne der vorliegenden Erfindung stets sämtliche Anwendungsformen wie Säuren, Ester, Salze und Isomere wie Stereoisomere und optische Isomere verstanden. So sind neben den neutralen Verbindungen stets auch deren Salze mit anorganischen und/oder organischen Gegenionen zu verstehen. So können Sulfonamide z.B. Salze bilden, bei denen der Wasserstoff der - SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z,B. Amino und Alkylamino, erfolgen. Geeignete Säuren hierfür sind starke anorganische und organische Säuren, beispielsweise HCI, HBr, H₂SO₄ oder HNO₃. Bevorzugte Ester sind die Alkylester, insbesondere die C₁-C₁₀-Alkylester wie Methylester.

Soweit In der oben genannten Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierten Carbaminsäuren, Sulfonsäuren, Sulfinsäuren, Phosphonsäuren, Phosphinsäuren. Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl. Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren. Ein Kohlenwasserstoffrest bedeutet ein geradkettiger, verzweigter oder cyclischer und gesättigter oder ungesättigter allphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl. Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl. Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein allphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten. Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono-und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind In der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Halosikoxy, Nitro und Cyano. Besonders bevorzugt sind dabei die Substituenten Methyl, Methoxy und Chlor. Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und-Trichlorphenyl, 2,4-, 3,5-, 2,5- und 2,3-Dichlorphenyl, o-, m- und p-Methoxyphenyl. Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl. Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, 1-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl, Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Ganz besonders bevorzugt von den Wirkstoffen aus der Gruppe der Sulfonamide und deren Salze (Komponente a) sind Propoxycarbazone und dessen Natriumsalz (Propoxycarbazon-methyl-natrlum), Methyl-4-[(4,5-dlhydro-3-methoxy-4-methyl-5-oxo-1 H-1,2,4-triazol-1-yl)carboxamidosulfonyl]-5-metylthiophen-3-carboxylat und dessen Natriumsalz, Amidosulfuron und dessen Natriumsalz (Amidosulfuron-methylnatrium), lodosuifuron-methyl und dessen Natriumsalz (Iodosulfuron-methylnatrium), Foramsulfuron und dessen Natriumsalz, Thifensulfuron-methyl und dessen Natriumsalz sowie Mesosulfuron-methyl und dessen Natriumsalz.

Die Wirkstoffe aus der Gruppe der Sulfonamide und deren Salze (Komponente b) sind In den erfindungsgemäßen Formulierungen im allgemeinen in Mengen von 0,1 - 80 Gew.-%, bevorzugt 1-75 Gew.-%, besonders bevorzugt 3-50 Gew.-%, ganz besonders bevorzugt 5-25 Gew.-% enthalten.

Die agrochemischen Wirkstoffe können auch Wachstumsregulatoren sein. Beispiele hierfür sind Cyclanilide, Ethephon, Tribufos und Thidiazuron.

Unter den in den erfindungsgemäßen Formulierungen als Komponente b) enthaltenen Wirkstoffen sind im Sinne der vorliegenden Erfindung neben den neutralen Verbindungen stets auch deren Salze mit anorganischen und/oder organischen Gegenionen zu verstehen. So können beispielsweise Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen, Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCI, HBr. H₂SO₄ oder HNO₃. Ein Beispiel hierfür wäre lodosulfuron-methyl-sodium (synonym lodosulfuron-methyl-Natdum).

Die vorstehend aufgeführten Herbizide (Verbindungen aus der Gruppe der Sulfonamide, Pflanzenwuchsregulatoren) sind z.B. bekannt aus "The Pesticide Manual", 12. Auflage (2000),13. Auflage (2003) und 14. Auflage (2006), The British Crop Protection Council oder aus den nach den einzelnen Wirkstoffen aufgeführten Literaturstellen.

Bevorzugt sind Herbizide, wie Vertreter aus der Gruppe der oben definierten "Sulfonamide", vorzugsweise z.B. blattaktive Herbizide wie ALS-Inhibitoren (z.B. Sulfonamide wie Thiencarbazone(-methyl), Flucarbazone, Propoxycarbazone oder Amlcarbazone oder Sulfonylharnstoffe wie Mesosulfuron, lodosulfuron-methyl(-sodium), Ethoxysulfuron, Amidosulfuron, Foramsulfuron), Diflufenican, Herbizide aus der Klasse der Benzoylcyclohexandione wie Tembotrione, Bromoxynilhaltige oder loxynilhaltige Produkte, Herbizide aus der Klasse der Aryloxy-Phenoxypropionate wie Fenoxaprop-P-ethyl, Herbizide aus der Klasse der Oxyacetamide (z.B. Flufenacet und Mefenacet), Herbizide aus der Klasse der Triazolopyrimidinsulfonamid-Derivate (z.B. Flumetsulam, Metosulam), Zuckerrübenherbizide wie Desmedipham, Phenmedipham, Ethofumesate oder Metamitron, Wirkstoffe aus der Klasse der HPPD-Inhibitoren (z.B. Isoxaflutole, Sulcotrione, Mesotrione) oder auch Wirkstoffe aus der Gruppe der phosphorhaltigen Herbizide oder deren Derivate wie Salze, wie z.B. Glufosinate und dessen Ammoniumsalz in racemischer Form, d.h. Z-Amlno-4-[hydroxy(methyl)phosphinoyl]-butansäure bzw. dessen Ammoniumsalz, das L-Enantiomer von Glufosinate und dessen Ammoniumsalz, Bilanafos/Bialaphos, d.h. L-2-Arnino-4-[hydroxy(methyl)phosphinoyl]-butanoyl-L-alaninyl-L-alanin und dessen Natriumsalz, sowie Glyphosate.

### Safener

Die agrochemischen Wirkstoffe können auch Safener sein. Beispiele hierfür sind
a) Verbindungen vom Typ der Dichiorphenylpyrazolin-3-carbonsäure, vorzugsweise Verbindungen wie
   1-(2,4-Dichlorphonyl)-5-(ethoxycarbonyl)-5-methyl-2-pyrazolin-3-carbonsäureethylester (S1-1) ("Mefenpyr-diethyl", PM), und verwandte Verbindungen, wie sie in der WO 91/07874 beschrieben sind:
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dlchlorphenyl)-5-isopropyl-pyrazol-3-carbonsäureethylester (S1-3), 1-(2.4-Dichiorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester(S1-5) und verwandte Verbindungen, wie sie in EP-A-333 131 und EP-A-269 806 beschrieben sind;
c) Verbindungen vom Typ der Triazolcarbonsäuren, vorzugsweise Verbindungen wie Fenchlorazol-ethyl(ester), d.h.
   1-(2,4-Dichlorphenyl)-5-trichlormethyl-(1H)-1,2,4-triazol-3-carbonsäureethylester (S1-6), und verwandte Verbindungen (EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbene)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäuteethylester (S1-8) ("Isoxadifen-ethyl") oder-n-propylester (S1-10) oder der 5-(4-Fluorphenyl)-5-phenyl-2-isoxazolin-3-carbonsäureethylester (S1.11), wie sie in der Patentanmeldung mit der Veröffentlichungsnummer WO-A-95/07897 beschrieben sind;
e) Verbindungen vom Typ der 8-Chinolinoxyesslgsäure (S2), vorzugsweise
   (5-Chlor-8-chinolinoxy)-esslgsäure-(1-methyl-hex-1-yl)-ester (Common name "Cloquintocet-mexyl" (S2-1) (siehe PM)
   (5-Chlor-8-chinolinoxy)-essigsäure-(1,3-dimethyl-but-1-yl)-ester (S2-2),
   (5-Chlor-8-chinolinoxy)-essigsäure-4-allyl-oxy-butylester (S2-3),
   (5-chlor-8-chinolinoxy)-essigsäure-1-allyloxy-prop-2-ylester (S2-4),
   (5-Chlor-8-chinolinoxy)-essigsäureethylester (S2-5),
   (5-Chlor-8-chinolinoxy)-essigsäuremethylester (S2-6),
   (5-Chlor-8-chinolinoxy)-essigsäureallylester (S2-7),
   (5-Chlor-8-chinolinoxy)-essigsäure-2-(2-propyliden-iminoxy)-1-ethylester (S2-8),
   (5-Chlor-8-chinolinoxy)-essigsäure-2-oxo-prop-1-ylester (S2-9)
   und verwandte Verbindungen, wie sie in EP-A-86 750, EP-A-94 349 und EP-A-191 736 oder EP-A-0 492 366 beschrieben sind;
f) Verbindungen vom Typ der (5-Chior-8-chinolinoxy)-maionsäure, vorzugsweise Verbindungen wie (5-Chlor 8-chinofinoxy)-malonsäurediethylester, (5-Chlor-8-chinolinoxy)-malonsäurediallylester, (5-Chlor-8-chlnolinoxy)-malonsäure-methyl-ethyloster und verwandte Verbindungen, wie sie in EP-A-0 582198 beschrieben sind;
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-proplonester (Mecoprop). MCPA oder 3,6-Dichlor-2-methoxy-benzoesäure(ester) (Dlcamba);
h) Wirkstoffe vom Typ der Pyrimidine, die als bodenwirksame Safener in Reis angewendet werden, wie z. B.
   "Fenclorim" (PM) (= 4,6-Dlchlor-2-phenylpyrimidin), das als Safener für Pretilachlor in gesätem Reis bekannt ist;
i) Wirkstoffe vom Typ der Dichloracetamide, die häufig als Vorauflaufsafener (bodenwirksame Safener) angewendet werden, wie z. B.
   "Dichlormid" (PM) (= N,N-Diallyl-2,2-dichloracetamid),
   "R-29148" (= 3-Dichloracetyl-2,2,5-trimethyl-1,3-oxazolidin von der Firma Stauffer),
   "Benoxacor" (PM) (= 4-Dichloracetyl-3,4-dihydro-3-methyl-2H-1,4-benzoxazin).
   "PPG-1292" (= N-Allyl-N-[(1,3-dioxolan-2-yl)-methyl]-dichloracetamld von der Firma PPG Industries),
   "DK-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "Diclonon" oder "BAS145138" oder "LAB145138" (= 3-Dichloracetyl-2,5,5-trimethyl-1,3-diazabicyclo[4.3.0]nonan von der Firma BASF) und
   "Furilazol" oder "MON 13900" (siehe PM) (= (RS)-3-Dlchloracetyl-5-(2-furyl)-2,2-dimethyloxazolidin);
j) Wirkstoffe vom Typ der Dichloracetonderivate, wie z. B.
   "MG 191" (CAS-Reg. Nr. 96420-72-3) (= 2-Dichlormethyl-2-methyl-1,3-dioxolan von der Firma Nitrokemia), das als Safener für Mais bekannt ist;
k) Wirkstoffe vom Typ der Oxylmlno-Verbindungen, die als Saatbeizmittel bekannt sind, wie z. B.
   "Oxabetrinil" (PM) (= (Z)-1,3-Dioxolan-2-ylmethoxyimino(phenyl)acetonitril), das als Saatbeiz-Safener für Hirse gegen Schäden von Metolachlor bekannt ist;
   "Fluxofenim" (PM) (= 1-(4-Chlorphenyl)-2,2,2-trifluor-1-ethanon-O-(1,3-dioxolan-2-ylmethyl)-oxim, das als Saatbeiz-Safener für Hirse gegen Schäden von Metolachlor bekannt ist, und
   "Cyometrinil" oder "CGA-43089" (PM) (= (Z)-Cyanomethoxyimino(phenyl)acetonitril), das als Saatbeiz-Safener für Hirse gegen Schäden von Metolachlor bekannt Ist;
l) Wirkstoffe vom Typ der Thiazolcarbonsäureester, die als Saatbeizmittel bekannt sind, wie z. B.
   "Flurazol" (PM) (= 2-Chlor-4-trifluormethyl-1,3-thlazol-5-carbonsäurebenzylester), das als Saatbeiz-Safener für Hirse gegen Schäden von Alachlor und Metolachlor bekannt ist;
m) Wirkstoffe vom Typ der Naphthalindicarbonsäurederivate, die als Saatbeizmittel bekannt sind, wie z. B.
   "Naphthalic anhydrid" (PM) (= 1,8-Naphthalindicarbonsäureanhydrid), das als Saatbeiz-Safener für Mais gegen Schäden von Thiocarbamatherbizlden bekannt ist,
n) Wirkstoffe vom Typ Chromanessigsäurederivate, wie z. B.
   "CL 304415" (CAS-Reg. Nr. 31541-57-8) (= 2-(4-Carboxy-chroman-4-yl)-essigsäure von der Firma American Cyanamid), das als Safener für Mais gegen Schäden von lmidazolinonen bekannt ist;
o) Wirkstoffe, die neben einer herbiziden Wirkung gegen Schadpflanzen auch Safenerwlrkung an Kulturpflanzen wie Reis aufweisen, wie z. B.
   "Dimepiperate" oder "MY-93" (PM) (= Piperldin-1-thiocarbonsäure-S-1-methyl-1-phenylethylester), das als Safener für Reis gegen Schäden des Herbizids Molinate bekannt ist;
   "Daimuron" oder "SK 23" (PM) (= 1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (= 3-(2-Chlorphenylmethyl)-1-(1-methyl-1-phenyl-ethyt)-hamstoff, siehe JP-A-60087254), das als Safener für Reis gegen Schäden einiger Herbizide bekannt ist,
   "Methoxyphenon" oder "NK 049" (= 3,3'-Dimethyl-4-methoxy-benzophenon), das als Safener für Reis gegen Schäden einiger Herbizide bekannt ist,
   "CSB" (= 1-Brom-4-(chlormethylsulfonyl)-benzol) (CAS-Reg. Nr. 54091-06-4 von Kumial), das als Safener gegen Schäden einiger Herbizide in Reis bekannt ist,
p) N-Acyleutfonamide der Formel (S3) und ihre Salze, 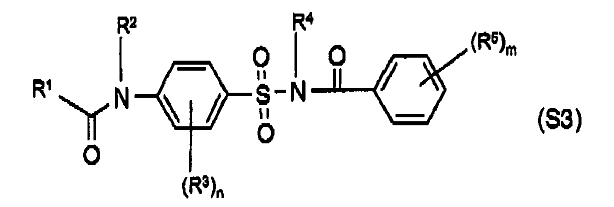 wie sie in WO-A-97145016 beschrieben sind,
q) Verbindungen vom Typ der Acylsulfamoylbenzoesäureamide der nachfolgenden Formel (S4), die z.B. bekannt sind aus WO-A-99/16744, 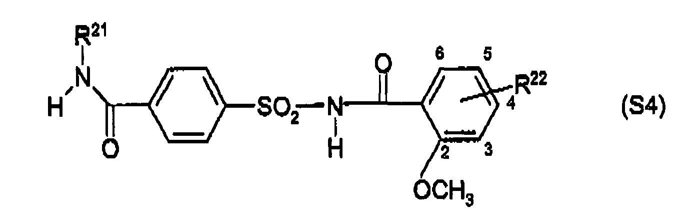 worin
   R21 = Cyclo-Propyl und R22 = H ist (4-Cyclopropylaminocarbonyl-N-(2-methoxybenzoyl)benzolsulfonamid; "Cyprosulfamide");
   R21 = Cyclo-Propyl und R22 = 5-Cl ist,
   R21 = Ethyl und R22 = H ist,
   R21 = iso-Propyl und R22 = 5-Cl ist und
   R21 = iso-Propyl und R22 = H ist (4-iso-propylaminocarbonyl-N-(2-methoxybenzoyl)benzolsuifonamid);
r) Verbindungen der Formel (S5), 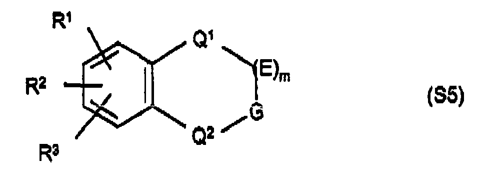 wie sie in der WO-A 98/13 361 beschrieben sind,
   einschließlich der Stereoisomeren und den in der Landwirtschaft gebräuchlichen Salzen.

Die vorstehend aufgeführten Safener sind z.B. bekannt aus "The Pesticide Manual", 12. Auflage (2000), 13. Auflage (2003) und 14. Auflage (2006), The British Crop Protection Council oder aus den nach den einzelnen Wirkstoffen aufgeführten Literaturstellen.

Bevorzugt sind Safener wie Mefenpyr-dlethyl, Cloquintocet-mexyl, Isoxadifen-ethyl, Cyprosulfamide (4-Cyclopropylaminocarbonyl-N-(2-methoxybenzoyl)benzolsulfonamid), 4-iso-propylaminocarbonyl-N-(2-methoxybenzoyl)benzolsulfonamid oder Fenchloraxal-ethyl.

Eine besondere Ausführungsform der erflndungsgemäßen Formulierungen sind Mischungen von Herbiziden und Safener als Komponente b). Die Gewichtsverhältnisse von Herbizid(mischung) zu Safener hängt im Allgemeinen von der Aufwandmenge an Herbizid und der Wirksamkeit des jeweiligen Safeners ab und kann Innerhalb weiter Grenzen variieren, beispielsweise im Bereich von 200:1 bis 1:200, vorzugsweise 100:1 bis 1:100, Insbesondere 20:1 bis 1:20.

### Fungizide

Die agrochemischen Wirkstoffe können auch Fungizide sein, beispielsweise
inhibitoren der Nucleinsäure Synthese, insbesondere
   Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure
Inhibitoren der Mitose und Zellteilung, insbesondere
   Benomyl, Carbendazim, Diethofencarb, Fuberidazole, Pencycuron, Thiabendazol, Thiophanat-methyl, Zoxamid
inhibitoren der Atmungskette Komplex I, Insbesondere
   Diflumetorim
Inhibitoren der Atmungskette Komplex II, insbesondere
   Boscalid, Carboxin, Fenfuram, Flutolanil, Furametpyr, Mepronil, Oxycarboxin, Penthiopyrad. Thifluzamid
Inhibitoren der Atmungskette Komplex III, insbesondere
   Azoxystrobin, Cyazofamid, Dimoxystrobin, Enestrobin, Famoxadon. Fenamidon, Fluoxastrobin, Kresoximmethyl, Metominostrobin, Orysastrobin, Pyraciostrobin, Picoxystrobin, Trifloxystrobin
Entkoppler, insbesondere
   Dinocap, Fluazinam
Inhibitoren der ATP Produktion, insbesondere
   Fentinacetat, Fentinchlorid, Fentinhydroxid, Silthiofam
Inhibitoren der Aminosäure- und Proteinbiosynthese, insbesondere
   Andoprim, Blasticldin-S, Cyprodinil, Kasugamycin, Kasugamycinhydrochlorid Hydrat, Mepanipyrim, Pyrimethanil
Inhibitoren der Signal-Transduktion, Insbesondere
   Fenpiclonil, Fludioxonil, Quinoxyfen
Inhibitoren der Fett- und Membran Synthese, insbesondere
   Chlozolinat, Iprodion, Procymidon, Vinclozolin
   Ampropylfos, Kalium-Ampropylfos, Edifenphos, Iprobenfos (IBP), Isoprothiolan, Pyrazophos
   Tolclofos-methyl, Biphenyl
   lodocarb, Propamocarb, Propamocarb hydrochlorid
Inhibitoren der Ergosterol Biosynthese, insbesondere
   Fenhexamid,
   Azaconazol, Bitertanol, Bromuconazol, Cyproconazol, Diclobutrazol,
   Difenoconazol, Diniconazol, Diniconazol-M, Epoxiconazol, Etaconazol,
   Fenbuconazol, Fluquinconazol, Flusilazol, Flutriafol, Furconazol, Furconazol-cis,
   Hexaconazol, Imibenconazol, Ipconazol, Metconazol, Myclobutanil,
   Paclobutrazol, Penconazol, Propiconazol, Prothioconazol, Simeconazol,
   Tebuconazol, Tetraconazol, Trisdimefon, Triadimenol, Triticonazol, Uniconazol,
   Voriconazol, Imazalll, Imazalilsulfat, Oxpoconazol, Fenarimol, Flurprimidol,
   Nuarimol, Pyrifenox, Triforin, Pefurazoat, Prochloraz, Triflumizol, Viniconazol,
   Aldimorph, Dodemorph, Dodemorphacetat, Fenpropimorph, Tridemorph,
   Fenpropidin, Spiroxamin,
   Naftifin, Pyributicarb, Terbinafin
Inhibitoren der Zellwand Synthese, insbesondere
   Benthiavalicarb, Bialaphos, Dimethomorph, Flumorph, Iprovalicarb, Polyoxins,
   Polyoxorim, Validamycin A
Inhibitoren der Melanin Biosynthese, Insbesondere
   Capropamid, Diclocymet, Fenoxanil, Phtalid, Pyroquilon, Tricyclazol
Resistenzinduktoren, insbesondere
   Acibenzolar-S-methyl, Probenazol, Tiadinil
Multisite, insbesondere
   Captafol, Captan, Chlorothalonil, Kupfersalze wie: Kupferhydroxid,
   Kupfernaphthenat, Kupferoxychlorid, Kupfersulfat, Kupferoxid, Oxin-Kupfer und
   Bordeaux Mischung, Dichlofluanid, Dithianon, Dodin, Dodin freie Base, Ferbam,
   Folpet, Fluorofolpet, Guazatin, Guazatinacetat, Iminoctadin,
   Iminoctadinalbesilat, Iminoctadintriacetat, Mankupfer, Mancozeb, Maneb,
   Metiram, Metiram Zink, Propineb, Schwefel und Schwefelpräparate enthaltend
   Calciumpolysulphid, Thiram, Tolylfluanid, Zineb, Ziram
Fungizide mit unbekannten Mechanismus, insbesondere
   Amibromdol, Benthiazol, Bethoxazin, Capsimycin, Carvon, Chinomethionat,
   Chloropicrin, Cufraneb, Cyflufenamid, Cymoxanil, Dazomet, Debacarb,
   Diclomezine, Dichlorophen, Dicloran, Difenzoquat, Difenzoquat Methylsulphat,
   Diphenylamin, Ethaboxam, Ferimzon, flumetover, Flusulfamid, Fluopicolid,
   Fluoroimid, Hexachlorobenzol, 8-Hydroxychinolinsulfat, Irumamycin,
   Methasulphocarb, Metrafenon, Methyl Isothiocyanat, Mildiomycin, Natamycin,
   Nickel dimethyldithiocarbamat, Nitrothal-Isopropyl, Octhilinon, Oxamocarb,
   Oxyfenthiin, Pentachlorophenol und Salze, 2-Phenylphenol und Salze, Piperalin,
   Propanosin -Natrium, Proquinazid, Pyrrolnitrin, Quintozen, Tecloftalam,
   Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2.4-Dihydro-5-methoxy-2-methyl-4-[[[(1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2.2-dimethyl-1H-inden-1-yl)-1H-imidazole-5-carboxylat, 3,4,5-Trichlor-2,6-pyridindicarbontril, Methyl 2-[[[cyclopropyl[(4-methoxyphenyl)imino]methyl]thio]methyl]-.alpha.-(methoxymethylen)-benzacetat, 4-Chlor-alpha-propinyloxy-N-[2-[3-methoxy-4-(2-proplnyloxy)phenyl]ethyl]-benzacetamide, (2S)-N-[2-[4-[[3-(4-chlorophenyl)-2-propinyl]oxy]-3-methoxyphenyl]ethyl]- 3-methyl-2-[(methylsulfunyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid N-(5-Brom-3-chlorpyridin-2-yl)methyl-2,4-dichlomlcotlnamid, 2-Butoxy-6-iod-3-propyl-benzopyranon-4-on, N-{(Z)-[(cyclopmpylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(tdfluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1-carbonsäure, O-(1-[(4-Methoxyphenoxy)methyl]-2,2-dimethylpropyl]-1H-imidazol-1- carbothioic acid, 2-(2-{[6-(3-Chlor-2-methylphenoxy)-5-fluorpyrimidin-4-yl]oxy}phenyl)-2-(methoxyimino)-N-methylacetamid

Die agrochemischen Wirkstoffe können auch Bakterizide sein, beispielsweise Bronopol, Dichlorophen, Nitrapyrin, Nlckel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Die vorstehend aufgeführten Fungizide (Bakterizide) sind z.B. bekannt aus "The Pesticide Manual", 12. Auflage (2000),13. Auflage (2003) und 14. Auflage (2006), The British Crop Protection Council oder aus den nach den einzelnen Wirkstoffen aufgeführten Literaturstellen.

Bevorzugt sind Fungizide, wie Bitertanol, Bromuconazol, Carbendazim, Carproamid, Cyproconazole, Edifenphos, Fenanidone, Fenhexamid, Fentins, Fluquinconazole, Fosetyl Aluminium, Iprodione, lprovalicarb, Pencycuron, Prochloraz, Propamocarb HCl, Propineb, Pyrimethanil, Spiroxamine, Tebuconazole, Tolylfluanid-Dichlofluanid, Triadimefon, Triadimenol, Trifloxystrobin.

### Insektizide

Die agrochemischen Wirkstoffe können auch Insektizide / Akarizide und/oder Nematizide sein, beispielsweise
Acetylcholinesterase (AChE) Inhibitoren
   Carbamate,
   zum Beispiel Alanycarb, Aldicarb, Aldoxycarb, Allyxycarb, Aminocarb, Bendiocarb, Benfuracarb. Bufencarb, Butacarb, Butocarboxim, Butoxycarboxim,
   Carbaryl, Carbofuran, Carbosulfan, Cloethocarb, Dimetilan, Ethiofencarb,
   Fenobucarb, Fenothlocarb, Formetanate; Furathiocarb, Isoprocarb, Metamsodium, Methiocarb, Methomyl, Metolcarb, Oxamyl, Pirimicarb, Promecarb,
   Propoxur, Thiodicarb, Thiofanox, Trimethacarb, XMC, Xylylcarb, Triazamate Organophosphate,
   zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos,
   Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos,
   Formothion, Fosmethilan, Fosthiazate, Heptenophos, lodofenphos, lprobenfos, lsazofos, Isofenphos, Isopropyl O-salicylate, lsoxathlon, Malathion, Mecarbam, Methacrifos, Methamidophos, Methidathion, Mevinphos, Monocrotophos, Naled, Omethoate, Oxydemeton-mathyl, Parathion (-methyl/-ethyl), Phenthoate, Phorate, Phosalone, Phosmet, Phosphamidon, Phosphocarb, Phoxim, Pirimiphos (-methyl/-ethyl). Profenofos, Propaphos, Propetamphos, Prothlofos, Prothoate, Pyraclofos, Pyridaphenthion, Pyridathion, Quinalphos, Sebufos, Sulfotep, Sulprofos, Tebupirimfos. Temephos, Terbufos,
   Tetrachlorvinphos, Thiometon, Triazophos, Triclorfon, Vamidothlon
Natrium-Kanal-Modulatoren / Spannungsabhängige Natrium-Kanal-Blocker
   Pyrethroide,
   zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin,
   Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin,
   Lambda- Cyhalothrin, Metofluthrin, Permethrin (cis-, trans-), Phenothrin (1 R-trans Isomer), Prallethrin, Profluthrin, Protrifenbute, Pyresmethrin, Resmethrin, RU 15525, Silafluofen, Tau-Fluvalinate, Tefluthrin, Terallethrin,
   Tetramethrin (-1 R- isomer), Tralomethrin, Transfluthrin, ZXI 8901, Pyrethrins (pyrethrum)
   DDT
   Oxadiazine,
   zum Beispiel Indoxacarb
   Semicarbazon,
   zum Beispiel Metaflumizon (BAS3201)
Acetylcholin-Rezeptor-Agonisten/-Antagonisten
   Chloronicotinyle,
   zum Beispiel Acetamiprid, Clothianidin, Dinotefuran, Imidacloprid, Nitenpyram, Nithiazine, Thiacloprid, Thiamethoxam
   Nicotine, Bensultap, Cartap
Acetyicholin-Rezeptor-Modulatoren
   Spinosyne,
   zum Beispiel Spinosad
GABA-gesteuerte Chlorid-Kanal-Antagonisten
   OtTganochtonne,
   zum Beispiel Camphechlor, Chlordane, Endosulfan, Gamma-HCH, HCH,
   Heptachlor, Lindane, Methoxychlor
   Fiprole,
   zum Beispiel Acetoprole, Ethiprole, Fipronil, Pyrafluprole, Pyriprole,
   Vanillprole
Chlorld-Kanal-Aktivatoren
   Mectine,
   zum Beispiel Abamectin, Emamectin, Emamectin-benzoate, Ivermectin,
   Lepimectin, Milbemycin
Juvenilhormon-Mimetika,
   zum Beispiel Diofenolan, Epofenonane, Fenoxycarb, Hydroprene, Kinoprene,
   Methoprene, Pyriproxifen, Triprene
Ecdysonagonisten/disruptoren
   Diacylhydrazine,
   zum Beispiel Chromafenozlde, Halofenozide, Methoxyfenozide, Tebufenozide
Inhibitoren der Chitinbiosynthese
   Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
   zum Beispiel Azocyclotin, Cyhexatin, Fenbutatin-oxide
Entkoppler der oxidativen Phoshorylierung durch Unterbrechung des H-Protongradienten
   Pyrrole,
   zum Beispiel Chlorfenapyr
   Dinitrophenole,
   zum Beispiel Binapacyrl, Dinobuton, Dinocap, DNOC
Site-I-Elektronentransportinhibitoren
   METI's,
   zum Beispiel Fenazaquin, Fenpyroximate, Pyrimidifen, Pyridaben, Tebufenpyrad, Tolfenpyrad
   Hydramethylnon
   Dicofol
Site-II-Elektronentransportinhibitoren
   Rotenone
Site-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetronsäuren,
   zum Beispiel Spirodiclofen, Spiromesifen
   Tetramsäuren,
   zum Beispiel Spirotetramat
   Carboxamide,
   zum Beispiel Flonicamid
   Oktopaminerge Agonisten,
   zum Beispiel Amitraz
Inhibitoren der Magnesium-stimulierten ATPase,
   Propargite
   Nereistoxln-Analoge,
   zum Beispiel Thlocyclam hydrogen oxalate, Thiosultap-sodium
Agonisten des Ryanodin-Rezeptors,
   Benzoesäuredicarboxamide,
   zum Beispiel Flubendiamid
   Anthranilamide,
   zum Beispiel DPX E2Y45 (3-bromo-N-{4-chloro-2-methyl-6-[(methylamino)carbonyl]phenyl}-1-(3-chloropyridin-2-yl)-1H-pyrazole-5-carboxamide)
Biologika, Hormone oder Pheromone
   Azadirachtin, Bacillus spec., Beauveria spec., Codlemone, Metarrhizium
   spec., Paecilomyces spec., Thuringiensin, Verticillium spec.
Wirkstoffe mit unbekannten oder nicht spezifischen Wirkmechanismen
   Fraßhemmer,
   zum Beispiel Cryolite, Flonicamid, Pymetrozine
   Milbenwachstumsinhibitoren.
   zum Beispiel Clofentezine, Etoxazole, Hexythiazox
   Amldoflumet, Benclothlaz, Benzoximate, Bifenazate. Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene.Verbutin.

Die vorstehend aufgeführten Insektizide (Akarizide, Nematizide) sind z.B. bekannt aus "The Pesticide Manual", 12. Auflage (2000), 13. Auflage (2003) und 14. Auflage (2006), The British Crop Protection Council oder aus den nach den einzelnen Wirkstoffen aufgeführten Literaturstellen.

Bevorzugt sind Insektizide, wie Acetamiprid, Acrinathrin, Aldicarb, Amitraz, Azinphos-methyl, Beta-Cyfluthrin, Carbaryl, Cyfluthrin, Cypermethrin, Deltamethrin, Endosulfan, Ethoprophos, Fenamiphos, Fenthion, lmidacloprid, Methamidophos, Methiocarb, Niclosamide, Oxydemeton-methyl, Phosalone, Prothiophos, Silafuofen, Thiacloprid, Thiodicarb, Tralomethrin, Triazophos, Trichlorfon, Triflumuron; ganz besonders bevorzugt aus der Gruppe Chloronicotinyle wie Acetamiprid, Clothianidin, Dinotefuran, Imidacloprid, Nitenpyram, Nithiazine, Thlacloprid, Thiamethoxam.

Besonders bevorzugte agrochemische Wirkstoffe sind Vertreter aus der Gruppe der oben definierten "Suffonamide", vorzugsweise Thiencarbazone(-methyl), Flucarbazone, Propoxycarbazone, Amicarbazone, Mesosulfuron, lodosuifuron-methyl(-sodium), Ethoxysulfuron, Amidosulfuron, Foramsulfuron, sowie Tembotrione, Isoxaflutole, Diflufenican, Flufenacet Cyprosulfamide, Mefenpyr-diethyl, Cloquintocet-mexyl, Isoxadifen-ethyl, Tebuconazole, Fluquinconazole, Imidacloprid und Thiacloprid.

Die erfindungsgemäßen Formulierungen enthalten in der Regel 0,01 bis 40 Gew.-%, bevorzugt 0,1 bis 30 Gew.-%, besonders bevorzugt 5 bis 20 Gew.-%, der (agrochemischen) Wirkstoffe (Komponente b) aus der Gruppe der Herbizide, Safener, insektizide und Fungizide, wobei die aus den erfindungsgemäßen Formullerungen erhältlichen agrochemischen Mittel (Pflanzenschutzmittel) in der Regel 0,01 bis 90 Gew.-% bezogen auf das agrochemischen Mittel, insbesondere 0,1 bis 80 Gew.-% der (agrochemischen) Wirkstoffe (Komponente b) aus der Gruppe der Herbizide, Safener, Insektizide und Fungizide enthalten können. Die flächenbezogenen Aufwandmengen der Komponente b) liegen Im allgemeinen zwischen 1 und 2000 g AS/ha (AS = Aktivsubstanz, d. h. Aufwandmenge bezogen auf den aktiven Wirkstoff), bevorzugt zwischen 2 und 1000 g AS/ha.

Die Netzmittel (Komponente c) in den erfindungsgemäßen Formulierungen können aus der Gruppe der nichtionischen und ionischen Tenside sowie Tenside auf nichtaromatischer Basis entnommen werden.

Als nichtionische Tenside kommen in Frage z.B. polyalkoxylierte, vorzugsweise polyethoxylierte, gesättigte und ungesättigte aliphatische Alkohole,
- mit 8 bis 24 C-Atomen im Alkylrest, der sich von den entsprechenden Fettsäuren oder aus petrochemischen Produkten ableitet, und
- mit 1 bis 100, vorzugsweise 2 bis 50, Ethylenoxideinheiten (EO), wobei die freie Hydroxy-Gruppe gegebenenfalls alkoxyliert ist;
- die z.B. kommerziell als ®Genapol X- und ®Genapol O-Reihe (Clariant), ®Crovol M-Relhe (Croda) oder ®Lutensol-Reihe (BASF) erhältlich sind;
- Verbindungen aus der Gruppe der Di- und Tri-btock-copotymere aus Alkylenoxiden, wie z.B. Verbindungen, die auf Basis von Ethylen- und Propylenoxid aufgebaut sind, mit mittleren Molmassen zwischen 200 und 14000, vorzugsweise 1400 bis 4000 g/mol, wobei der Massenanteil des polyethoxylierte Blocks zwischen 10 und 80% variiert, wie z.B. ®Synperonic PE-Reihe (Uniqema), ®Pluronic PE-Reihe (BASF), ®VOP 32- oder®Genapol PF-Reihe (Clariant) und
- Nonylphenole, wie z.B. Produkte aus der ®Arkopal-Reihe (Clariant).

Als lonische Tenside kommen in Frage z.B.
- polyalkoxylierte, vorzugsweise polyethoxylierte Tenside, die ionisch modifiziert sind, z.B. durch Umsetzung der endständigen freien Hydroxylfunktion des Polyethylenoxidblocks zu einem Sulfat- oder Phosphatester (z.B. als Alkali-und Erdalkalimetallsalze), wie z.B. ®Genapol LRO oder Dispergiermittel 3618 (Clariant), ®Emulphor (BASF) oder ®Crafol AP (Cognis).

Als Tenside auf nichtaromatischer Basis kommen in Frage z.B.
- Sulfosuccinate, Alkansulfonate, Paraffin- und Olefinsulfonate wie ®Netzer IS, ®Hoe S1728, ®Hostapur OS, ®Hostapur SAS von Clariant, ®Triton GR7ME und GR5 von Union Carbide, ®Empimin-Produkte von Albright und Wilson, ®Marlon-PS65 von Condea.
- Fettsäureamidalkoxylate wie die ®Comperlan-Produkte von Henkel oder die ®Amam-Produkte von Rhodia. Alkylenoxydaddukte von Alkindiolen wie die ®Surfynol-Produkte von Air Products. Zuckerderivate wie Amino- und Amidozucker von Clariant, Glukitole von Clariant, Alkylpolyglycoside in Form der ®APG-Produkte von Henkel oder wie Sorbitanester in Form der ®Span-oder ®Tween-Produkte von Uniquema oder Cyclodextrinester oder -ether von Wacker.

Typische Vertreter geeigneter Netzmittel sind unter anderem ®Monatrope 1620 (syn. AL 2575, Alkylpolyglukoside; Uniqema), ®Atlox 4894 (Fettalkohol-ethoxylat, nonylphenolfrei, syn. POE-Alkylether; Uniqema), ®Morwet EFW (Alkylnaphthalinsulfonsäure-Derivat; Akzo Nobel), ®Morwet DB (Dibutylnaphthalinsulfonat-Na-Salz; Akzo Nobel), ®Galoryl MT 800 (Natrium-Dibutylnaphthalinsulfonsäure; CFPI-Nufarm) und ®Nekal BX (Alkylnaphthalinsulfonat; BASF).

Bevorzugt sind hier ®Monatrope 1620 und ®Atlox 4894.

Der Anteil der Netzmittel in den erfindungsgemäßen Formulierungen (Komponente c) kann 0,1 bis 20 Gew.-%, bevorzugt 1 bis 5 Gew.-% betragen.

Die Dispergiermittel (Komponente d) in den erfindungsgemäßen Formulierungen können aus der Gruppe der nichtionischen und ionischen Tenside sowie Tenside auf nichtaromatischer Basis entnommen werden.

Als nichtionische Tenside kommen in Frage z.B. polyalkoxylierte, vorzugsweise polyethoxylierte Hydroxyfettsäuren oder Hydroxyfettsäuren enthaltene Glyceride, wie z.B. Ricinin bzw. Rizinusöl, mit einem Ethoxylierungsgrad zwischen 10 und 80, bevorzugt 25 bis 40, wie z.B. ®Emulsogen EL-Reihe (Clariant) oder®Agnique CSO-Reihe (Cognis);

Als ionische Tenside kommen in Frage z.B.
- Alkall- und Erdalkalimetallsalze von Alkylarylsulfonsäuren mit linearer oder verzweigter Alkylkette, wie Phenylsulfonat CA oder Phenylsulfonat CAL (Clariant), ®Atlox 3377BM (Uniqema), ®Empiphos TM-Reihe (Huntsman);
- Polyelektrolyte, wie Ligninsulfonate, Polystyrolsulfonat oder sulfonierte ungesättigte oder aromatische Polymere (Polystyrole, Polybutadiene oder Polyterpene), wie ®Tamol-Reihe (BASF), ®Morwet D425 (Witco). ®Kraftsperse-Reihe (Westvaco), ®Borresperse-Reihe (Borregard).

Als Tenside auf nichtaromatischer Basis kommen in Frage z.B.
- Fettsäureamidalkoxylate wie die ®Comperlan-Produkte von Henkel oder die ®Amam-Produkte von Rhodia.
- Alkylenoxydaddukte von Alkindiolen wie die ®Surfynol-Produkte von Air Products. Zuckerderivate wie Amino- und Amidozucker von Clariant, Glukitole von Clariant, Alkylpolyglycoside in Form der ®APG-Produkte von Henkel oder wie Sorbitanester in Form der ®Span- oder ®Tween-Produkte von Uniquema oder Cyclodextrinester oder -ether von Wacker.
- Grenzflächenaktive Polyacryl- und Polymethacrylderivate wie die ®Sokalan-Produkte von der BASF.

Typische Vertreter geeigneter Dispergiermittel sind unter anderem ®Dispersogen LFH (Tristyrylphenol-polyethylenglykol-phosphorsäureester, Clariant), ®Agnique PG-Reihe 9116 (Alkylpolyglycoside, Cognis) und ®Atlox 4913 (Polyoxyethylanacrylsäure-Copolymerlösung in Propylenglykol;Uniqema)

Bevorzugt sind hier ®Dispersogen LFH und ®Atlox 4913.

Der Anteil der Dispergiermittel in den erfindungsgemäßen Formulierungen (Komponente d) kann 0.1 bis 20 Gew.-%, bevorzugt 1 bis 5 Gew.-% betragen.

Als Antischaummittel (Entschäumer, Komponente e) in den erfindungsgemäßen Formulierungen kommen z.B. in Frage Substanzen auf Silikonbasis von Wacker, Rhodia, Dow Coming und auf Acetylenbasis, wie beispielsweise solche von Airproducts, in Frage. Zu nennen wären oberflächenaktive Verbindungen auf Silikon- bzw. Silanbasis wie die ®Tegopren-Produkte (Goldschmidt), die ®SE-Produkte (Wacker), sowie die ®Bevaloid-, ®Rhodorsil- und ®Silcolapse-Produkte (Rhodia, Dow Coming, Reliance, GE, Bayer)

Typische Vertreter geeigneter Antischaummittel sind unter anderem ®Antischaummittel SL und SE2 (Wacker), ®Rhodorsil 481(Polydimethylsiloxan/Kieselsäure, Rhodia) sowie die ®Rhodorsil-Typen 432 und 454.

Bevorzugt sind hier die ®Rhodorsil-Typen 432, 454 und 481, insbesondere ®Rhodorsil 481.

Der Anteil der Antischaummittel in den erfindungsgemäßen Formulierungen (Komponente e) kann 0,02 bis 2 Gew.-%, bevorzugt 0,2 bis 1,5 Gew.-% betragen.

Als Mittel zum Einstellen rheologischer Eigenschaften (Komponente f) in den erfindungsgemäßen Formulierungen kommen z.B. in Frage:
- modifizierte natürliche Silikate, wie chemisch modifizierte Bentonite, Hectorite, Attapulgite, Montmorillonite, Smektite oder andere Silikatmineralien, wie ®Bentone (Elementis), ®Attagel (Engelhard), ®Agsorb (Oil-Dri Corporation) oder ®Hectorite (Akzo Nobel),
- natürliche und synthetische Silikate, wie Silikate der ®Sipemat-, ®Aerosil-oder ®Durosil-Reihe (Degussa), der ®CAB O SIL-Reihe (Cabot) oder der Van Gel-Reihe (R.T. Vanderbilt),
- Verdicker auf Basis synthetischer Polymere, wie Verdicker der ®Thixin- oder ®Thixatrol-Reihe (Elementis).

Typische Vertreter geeigneter Mittel zum Einstellen rheologischer Eigenschaften sind unter anderem natürliche Silikate, wie z.B. Kaolin, Bentonit, Talkum, Pyrophyllit, Diatomeenerde oder Tonerde (u.a. ®Kaolin 1777 von Ziegler, Wunsiedel; ®Agsorb LVM-GA als Attapulgit; ®Harborlite 300 als Perlit von Lehmann & Voss: ®Omya-Kreide als Calciumcarbonat; Erdmetall- und Erdalkalimetallsilikate, wie z.B. Alumosilikate (u.a. ®Kaolin Tec 1 oder ®Kaolin W als Alumlniumhydrosilikate von Erbslöh) oder Magnesiumsilikate (u.a. ®Steamic OOS als Talk, Magnesiumsilicat); synthetische Silikate , wie z.B. pyrogene Kieselsäuren oder Fällungskieselsäuren, wie die Produktreihen ®Sipemat (u.a. ®Sipemat 50 S oder ®Sipemat 500 LS), ®Dessalon, ®Extrusil, ®Aerosil (u.a. ®Aerosil COK 84 oder ®Aerosil 200 als Siliziumdioxid von Degussa), ®Silkasil oder ®Ketiensil; Produkte auf organischer und/oder anorganischer Basis, wie z.B. wie ®Bentone 38, ®Bentone EW (Elementis) und ®Rhodopol 23 (Xanthan Derivat, Heteropolysaccharide, Rhodia).

Bevorzugt sind hier ®Rhodopol 23, ®Aerosil 200 und ®Kaolin W.

Der Anteil der Mittel zum Einstellen rheologischer Eigenschaften in den erfindungsgemäßen Formulierungen (Komponente f) kann 0 bis 7 Gew,-%, bevorzugt 0,1 bis 4 Gew.% betragen.

Als Säuren zum Einstellen eines pH-Wertes zwischen 2,5 bis 4,5 (Komponente g) in den erfindungsgemäßen Formulierungen können prinzipiell alle geeigneten Säuren verwendet werden. Bevorzugt sind mehrbasige organische Säuren. Beispiele für geeignete mehrbasige organische Säuren sind z.B. Zitronensäure, Weinsäure, Bersteinsäure, Maleinsäure, Fumarsäure etc. Besonders bevorzugt ist Zitronensäure, sowohl als monohydrat krist, wie auch wasserfrei.

Der Anteil der Säuren zum Einstellen eines pH-Wertes zwischen 2,5 bis 4,5 in den erfindungsgemäßen Formulierungen (Komponente g) kann 0 bis 3 Gew.-%, bevorzugt 0,3 bis 1,5 Gew.-% betragen.

Als Konservierungsmittel (Biozide; Komponente h) in den erfindungsgemäßen Formulierungen können prinzipiell alle geeigneten Substanzen verwendet werden. Beispiele für geeignete Konservierungsmittel sind z.B. aus den Produktreihen ®Acticide, wie ®Acticide MBS (eine Mischung aus 2 Methyl-2H-isothiazol-3-on und 1,2-Benzisothiazol-3-(2H)on, Thor Chemie), ®Mergal, wie ®Mergal WP1 und ®Mergal K9N, und ®Proxel, wie ®Proxel XL2 (Natriumsalz in Wasser und Propylenglykol von 1,2-Senzisothiazol-3-(2H)on, Zeneca) und ®Proxel GXL (wässrige Dipropylenglykollösung von ca. 20% 1,2-Benzisothiazolin, Avecia - Frankfurt).

Bevorzugt sind hier ®Acticide MBS und ®Proxel GXL.

Der Anteil der Konservierungsmittel in den erfindungsgemäßen Formulierungen (Biozide; Komponente h) kann 0 bis 1 Gew.-%, bevorzugt 0,05 bis 0,4 Gew.-% betragen.

Als weitere Formulierungshilfsmittel (Komponente i) in den erfindungsgemäßen Formulierungen kommen z.B. In Frage geeignete Antioxidantien, Farb- und Duftstoffe, Netz-, Anti-Drift-, Haft- und Penetrationsmittel (Adjuvantien), die dem Fachmann bekannt sind. Daneben kann es von Vorteil sein im Hinblick auf die biologische Wirksamkeit und/oder Stabilität bestimmter agrochemischer Wirkstoffe den erfindungsgemäßen Formulierungen Salze, wie z.B. Düngemittel, zuzusetzen.

Bevorzugt sind Salze, wie z.B. Ammonium-, Alkali-, oder Erdalkalisalze, besonders bevorzugt NaCl, Na₂SO₄ , MgCl₂ , NH₄NO₃ und Ammoniumsulfat, insbesondere Ammoniumsulfat, wobei die Qualiität von 'technisch' bis 'hochrein' variieren kann.

Der Anteil der weiterer Formulierungshilfsmittel in den erfindungsgemäßen Formulierungen (Komponente 1) kann 0 bis 30 Gew.-%, bevorzugt 5 bis 15 Gew.-% betragen.

Beispiele für weitere Tenside (Komponente j) in den erfindungsgemäßen Formullerungen, die von den Komponenten c) und d) verschieden sind, sind nachfolgend aufgeführt, worin EO=Ethylenoxid-Einheiten, PO=Propylenoxid-Einheiten und BO=Butylanoxid-Einheiten bedeutet:
1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-, Cycloalkyl- oder Acylrest mit 1-24 Kohlenstoffatomen endgruppenverschlossen sein. Beispiele für derartige Verbindungen sind: ®Genapol C-, L-, O-, T-, UD-, UDD-, X-Produkte von Clariant, ®Plurafac- und ®Lutensol A-, AT-, ON-, TO-Produkte von BASF, ®Marlipal 24- und 013 Produkte von Condea, ®Dehypon-Produkte von Henkel, ®Ethylan-Produkte von Akzo-Nobel wie ®Ethylan CD 120.
2) Anionische Derivate der unter 1) beschriebenen Produkte in Form von Ethercarboxylaten, Sulfonaten, Sulfaten und Phosphaten und deren anorganischen (z.B. Alkali und Erdalkali) und organischen Salzen (z.B. auf Amin- oder Alkanolaminbasis) wie ®Genapol LRO, ®Sandopan-Produkte, ®Hostaphat/Hordaphos-Produkte von Clariant.
   Copolymere bestehend aus EO, PO und/oder BO Einheiten wie zum Beispiel Blockcopolymere wie die ®Pluronic-Produkte von der BASF und die ®Synperonic-Produkte von Uniquema mit einem Molekulargewicht von 400 bis 10⁸.
   Alkylenoxydaddukte von C₁ - C₉ Alkoholen wie ®Atlox 5000 von Uniquema oder ®Hoe-S3510 von Clariant.
   Typische weitere Vertreter sind unter anderem auch ®Galoryl MT 804 (Dibutylnaphthalenaulfonat Na-Salz) von Nufam, ®Geropon T 36 (Na-Polycarboxylsäure), ®Supragil MNS 90 (Methylnaphthallnsulfonsäure Na-Salz Kondensationsprodukt) von Rhodia und ®Darvan No 3 (Na-Polymerisat substituierter Benzoidataikyisutfonate) von Vanderbuilt, die als Dispergiermittel eingesetzt werden können, sowie ®Geronol CF/AR (NH₄-Salz Phosphorester ethoxylierter Alkohole) und ®Supragil WP (Na-Di-Isopropylnaphthalen Sulfonat) von Rhodia, die als Netzmittel eingesetzt werden können.
3) Fettsäure- und Triglycertdalkoxylate wie die ®Serdox NOG-Produkte von Condea oder alkoxylierte Pflanzenöle wie Sojaöl, Rapsöl. Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die ®Emulsogen-Produkte von Clariant, Salze von aliphatischen, cycloaliphatischen und olefinischen Carbonsäuren und Polycarbonsäuren, sowie Alpha-Sulfofettsäureester wie von Henkel erhältlich.
4) Fettsäureamidalkoxylate wie die ®Comperlan-Produkte von Henkel oder die ®Amam-Produkte von Rhodia.
   Alkylenoxydaddukte von Alkindiolen wie die ®Surfynol-Produkte von Air Products. Zuckerderivate wie Amino- und Amidozucker von Clariant, Glukitole von Clariant, Alkylpolyglycoside in Form der ®APG-Produkte von Henkel oder wie Sorbitanester in Form der ®Span- oder ®Tween-Produkte von Uniquema oder Cyclodextrinester oder -ether von Wacker. Ein typischer Vertreter hier ist unter anderem auch ®Atplus 435 (Alkylpolyglykosid Alkylpolysaccharid Mischung) von ICI, der beispielsweise als Netzmittel verwendet werden kann.
5) Oberflächenaktive Cellulose- und Algin-, Pektin- und GuarderIvate wie die ®Tylose-Produkte von Clariant, die ®Manutex-Produkte von Kelco und Guarderivate von Cesalpina.
   Alkylenoxydaddukte auf Polyolbasis wie ®Polyglykol-Produkte von Clariant. Grenzflächenaktive Polyglyceride und deren Derivate von Clariant.
6) Sulfosuccinate, Alkansulfonate, Paraffin- und Olefinsulfonate wie ®Netzer IS, ®Hoe S1728, ®Hostapur OS, ®Hostapur SAS von Clariant, ®Triton GR7ME und ®GR5 von Union Carbide, ®Empimin-Produkte von Albright und Wilson, ®Marlon-PS65 von Condea.
7) Sulfosuccinamate wie die ®Aerosol-Produkte von Cytec oder die ®Empimin-Produkte von Albright und Wilson.
8) Alkylenoxidaddukte von Fettaminen, quartäre Ammonium-Verbindungen mit 8 bis 22 Kohlenstoffatomen (C₈-C₂₂) wie z.B. die ®Genamin C, L, O, T-Produkte von Clariant.
9) Oberflächenaktive, zwitterionische Verbindungen wie Tauride, Betaine und Sulfobetaine in Form von ®Tegotain-Produkte von Goldschmldt, ®Hostapon T- und ®Arkopon T-Produkte von Clariant.
10) Oberflächenaktive Verbindungen auf Silikon- bzw. Silanbasis wie die ®Tegopren-Produkte von Goldschmidt und die ®SE-Produkte von Wacker, sowie die ®Bevaloid-, ®Rhodorsil- und ®Silcolapse-Produkte von Rhodia (Dow Coming, Reliance, GE, Bayer).
11) Per- oder polyfluorierte oberflächenaktive Verbindungen wie ®Fluowet-Produkte von Clariant, die ®Bayowet-Produkte von Bayer, die ®Zonyl-Produkte von DuPont und Produkte dieser Art von Dalkin und Asahi Glass.
12) Grenzflächenaktive Sulfonamide z.B, von Bayer.
13) Grenzflächenaktive Polyacryl- und Polymethacrylderivate wie die ®Sokalan-Produkte von der BASF.
14) Oberflächenaktive Polyamide wie modifizierte Gelatine oder derivatisierte Polyasparginsäure von Bayer und deren Derivate.
15) Tensidische Polyvinylverbindungen wie modifiziertes Polyvinylpyrollidon wie die ®Luviskol-Produkte von BASF und die ®Agrimer-Produkte von ISP oder die derivatisierten Polyvinylacetate wie die ®Mowilith-Produkte von Clariant oder die -butyrate wie die ®Lutonal-Produkte von der BASF, die ®Vinnapas-und die ®Ploloform-Produkte von Wacker oder modifizierten Polyvinylalkohole wie die ®Mowiol-Produkte von Clariant.
16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die ®Agrimer-VEMA-Produkte von ISP.
17) Oberfächenaktive Derivate von Montan-, Polyethylen-, und Polypropylenwachsen wie die ®Hoechst-wachse oder die ®Licowet-Produkte von Clariant.
18) Oberflächenaktive Phosphonate und Phosphinate wie ®Fluowet-PL von Clariant.
19) Poly- oder perhalogenlerte Tenside wie beispielsweise ®Emulsogen-1557 von Clariant.
20) Verbindungen, die formal die Umsetzungsprodukte der oben genannten Phenole mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
21) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecyibenzolsulfonsäure und deren öl-lösliche Salze wie beispielsweise das Calciumsalz oder das Isopropylammoniumsalz der Dodecylbenzalsulfonsäure.

Bei den Alkylenoxy-Einheiten sind Ethylenoxy-, Propylenoxy- und Butylenoxy-Einheiten, insbesondere Ethylerloxy-Einheiten bevorzugt.

Beispiele für Tenside aus der Gruppe der Tenside auf nichtaromatischer Basis sind die Tenside der vorstehend genannten Gruppen 1) bis 19), vorzugsweise der Gruppen 1), 2), 6) und 8).

Beispiele für Tenside aus der Gruppe der Tenside auf Aromatenbasis sind die Tenside der vorstehend genannten Gruppen 20) und 21), vorzugsweise mit 4 bis 10 mol Ethylenoxid umgesetztes Phenol, kommerziell beispielsweise in Form der ®Agrisol-Produkte (Akcros) erhältlich, mit 4 bis 50 mol Ethylenoxid umgesetztes Nonylphenol, kommerziell beispielsweise in Form der ®Arkopal-Produkte (Clariant) erhältlich, mit 1 bis 50 mol Ethylenoxid umgesetztes Tristyrylphenol, beispielsweise aus der ®Soprophor-Reihe (Rhodia) wie ®Soprophor FL, ®Soprophor 4D-384, und saures (lineares) Dodecylbenzolsulfonat, kommerziell beispielsweise in Form der ®Marion-Produkte (Hüls) erhältlich.

Der Anteil der weiterer Tenside in den erfindungsgemäßen Formulierungen (Komponente j) kann 0 bis 10 Gew.-% betragen.

Die weiteren Lösungsmittel (Komponente k) in den erfindungsgemäßen Formulierungen können, neben Wasser, aus den Gruppen der
- organische Lösungsmittel, wie z.B. Gamma-Butyrolacton, Pyrrolidone wie z.B. N-methyl-pyrrolidon (NMP), N-butyl-pyrnolidon, N-octyl-pyrrolidon (®Agsol EX 8), N-dodecyl-pyrrolidon und N-cyclohexyl-pyrroildon, Acetophenon, ®Solvesso ND, 200, u.a.;
- aliphatische Lösungsmittel, wie z.B. ®Genagen 4166 (N,N-Dimeihyifensäureamid). ®Highsolv A (Acetal), Hexanol, Propylencarbonat, ®Highso;
- Lösungsmittel auf pflanzlicher Basis, wie z.B. ®Edenor Mesu (Rapsölmethylester); entnommen werden.

Bevorzugt als weiteres Lösungsmittel ist Wasser, wobei die Qualiität von Leitungswasser über entsalztes Wasser bis destilliertem Wasser variieren kann.

Der Anteil der weiteren Lösungsmittel, vorzugsweise Wasser, in den erfindungsgemäßen Formulierungen (Komponente k) im allgemeinen 0 bis 30 Gew.-%, bevorzugt 0 bis 20 Gew.-%, besonders bevorzugt 0 bis 13 Gew.-% betragen.

Sowohl die Verwendung der einzelnen Komponenten und deren Gehalt können in den erfindungsgemäßen Formullerungen innerhalb eines größeren Bereichs variieren.

Die Erfindung betrifft weiterhin ein agrochemlsches Mittel, welches aus den erfindungsgemäßen Formulierungen durch Verdünnen mit Flüssigkeiten, bevorzugt Wasser, hergestellt werden kann.

Die erfindungsgemäßen Formullerungen können z.B. in den für Flüssigpräparate üblichen Zubereitungsformen entweder als solche oder nach vorherigem Verdünnen, z.B. mittels Wasser, ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Es kann vorteilhaft sein, den so erhaltenen agrochemischen Mitteln (Spritzbrühen) weitere Wirkstoffe, bevorzugt agrochemische Wirkstoffe (z.B. als Tankmischpartner in Form entsprechender Formulierungen) und/oder zur Anwendung übliche Hilfs-und Zusatzstoffe, z.B. Adjuvantien wie z.B. selbstemulgierende Öle wie Pflanzenöle oder Paraffinöle und/oder Düngemittel zuzugeben. Gegenstand der vorliegenden Erfindung sind daher auch die auf solche Weise hergestellten agrochemischen Mittel.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Die jeweilige flächen- und/oder objektbezogene Aufwandmenge der agrochemischen Mittel zur Bekämpfung der genannten Schadorganismen variiert sehr stark. Im Allgemeinen werden hierfür die, dem Fachmann als gebräuchlich für das jeweilige Einsatzgebiet bekannten Applikationsmedlen in den gebräuchlichen Mengen eingesetzt; wie beispielsweise von mehreren hundert Liter Wasser pro Hektar bei Standard-Spritzverfahren über wenige Liter Öl pro Hektar bei der ,Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.-% bis 99 Gew.-%, besonders bevorzugt von 0,1 Gew.-% bis 90 Gew.-%.

Die Aufwandmenge an den erfindungsgemäßen Formulierungen kann innerhalb eines größeren Bereiches variiert werden. Sie richtet sich nach den jeweiligen agrochemischen Wirkstoffen und nach deren Gehalt in den Formulierungen.

Besondere Ausführungsformen der Erfindung betreffen die Verwendung der erfindungsgemäßen Formulierungen und der daraus erhältlichen agrochemischen Mittel zur Bekämpfung von unerwünschten, schädlichen Organismen, unter Ausschluss einer therapeutische Anwendung bei Mensch und Tier, bei gleichzeitiger exzellenter Kulturpflanzenverträgliehkeit, d.h. hoher Selektivität, im Folgenden als "fungizides Mittel" oder "Insektizides Mittel" bezeichnet, wobei der Begriff "fungizides Mittel" sowohl Mittel gegen Pilze (Fungizide) wie auch Bakterien (Bakterizide) beinhaltet und der Begriff "insektizides Mittel" sowohl Mittel gegen Insekten (Insektizide) wie auch Spinnen (Akarizide), Nematoden (Nematizide), Mollusken (Molluskizide), Nagetiere (Rodentizide) und auch Abschreckungsmittel (Repellents) beinhaltet - soweit aus dem Zusammenhang nichts anderes hervorgeht.

Eine besondere Ausführungsform der Erfindung betrifft die Verwendung der aus den erfindungsgemäßen Formulierungen erhältlichen agrochemischen Mittel zur Bekämpfung von unerwünschtem Pflanzenwuchs (Schadpflanzen) bei gleichzeitiger exzellenter Kulturpflanzenverträglichkeit, d.h. hoher Selektivität, im Folgenden als "herbizides Mittel" bezeichnet, wobei der Begriff" herbizides Mittel" sowohl Mittel gegen Unkräuter (Herbizide), zur Regulation des Pflanzenwachstums (Pflanxenwuchsregulatoren), zum Schutze von Kulturpflanzen (Safener) und zur Emährung (Pflanzennährstoffe), und auch Substanzen beinhaltet, die über systemische Eigenschaften verfügen, sowie als Kombinationspartner in Frage kommende Kontaktmittel - soweit aus dem Zusammenhang nichts anderes hervorgeht.

Weitere besondere Ausführungsformen der Erfindung betreffen Verfahren zur Bekämpfung von unerwünschten, schädlichen Organismen bei dem die erfindungsgemäßen Formulierungen oder die daraus erhältlichen agrochemischen Mittel mit einer wirksamen Menge auf die schädlichen Organismen oder in deren Lebensraum appliziert werden, wobei Verfahren zur therapeutischen Anwendung bei Mensch und Tier dabei ausgeschlossen sind.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhlzomen, Wurzelstöcken oder anderen Dauerorganen austreiben, werden gut erfasst. Dabei können die herbiziden Mittel z.B. im Vorsaat-, Vorauflauf- oder Nachauflaufverfahren ausgebracht werden. Im einzelnen selen beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. Sowie Bromus spp. Wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfasst. Bei dikotylen Unkrautarten erstreckt sich das Wirkungsspektrum auf Arten wie z.B. Abutllon spp., Amaranthus spp., Chenopodium spp., Chrysanthemum spp., Galium spp. Wie Galium aparine, lpomoea spp., Kochia spp., Lamium spp., Matricaria spp., Pharbitis spp., Polygonum spp., Sida spp., Sinapis spp., Solanum spp., Stellaria spp., Veronica spp. Und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft.

Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadlum heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist In der Regel günstig. Als besonderer Vorteil fällt ins Gewicht, dass die in den herbiziden Mittel verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um Iandwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kutturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder In Zierpflanzungen.

Darüber hinaus weisen die entsprechenden herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Emteerleichterung wie z.B, durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Emtegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mals oder auch Kulturen von Zuckerrübe, Baumwolle, Soja, Raps, Kartoffel, Tomate, Erbse und anderen Gemüsesorten. Vorzugsweise können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs (Schadpflanzen), vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen Formulierungen oder die daraus erhältlichen herbiziden Mittel mit einer wirksamen Menge auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Die erfindungsgemäß behandelten Pflanzen sind, soweit es den Einsatz von Herbiziden betrifft, alle Arten von Schadpflanzen, wie Unkräutern. Was den Schutz von Kulturpflanzen durch Applikation von beispielsweise Fungiziden und Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Erdnuss, Zuckerrübe, Baumwolle, Soja, Raps, Kartoffel, Tomate, Erbse und anderen Gemüsesorten bevorzugt.

Der Herstellungsprozess der erfindungsgemäßen Formulierungen kann aus einer Reihe von an sich bekannten Verfahren ausgewählt werden, weiche die Herstellung von Suspensionskonzentraten beschreiben. Bevorzugt sind hieraus die Verfahren bei denen eine Vermahlung in einer Zahnkolloidmühle, gegebenenfalls Feinvermahlung in einer Perlmühle, stattfindet. Allen Verfahren ist gemeinsam, dass die einzelnen Komponenten in den jeweiligen, herstellungsbedingten Mengenverhältnissen zusammengebracht werden und wobei immer Glycerin mit 60 bis 90 Gew.-%, bevorzugt 70 bis 85 Gew.-% bezogen auf das Gesamtgewicht der Formulierung, vorgelegt wird.

Die erfindungsgemäßen Formulierungen weisen eine ausgezeichnete chemische und physikalische Stabilität während der Herstellung und Lagerung auf und eignen sich insbesondere auch für die Kombinationen von Wirkstoffen mit unterschiedlichen physikalisch-chemischen Eigenschaften. Insgesamt zeigen die erfindungsgemäßen Formulierungen die angestrebte Langzeit-Lagerstabilltät und sind anwendungstechnisch einwandfrei.

### Beispiele

Die Beispiele sollen die Erfindung illustrieren und stellen keine Beschränkung auf die In ihnen beschriebenen Verfahren und Verbindungen dar.

### Herstellungsverfahren (z.B. Beispiel 3, Tabelle 1):

Glycerin (Komponente a) wird Im Rührkessel vorgelegt und der Rührer in Betrieb genommen. Alle weiteren flüssigen Komponenten werden zugegeben, wobei die Komponente(n) b) zum Schluss zugegeben werden. Danach wird das Produkt über eine Zahnkolloidmühle vorvermahlen im Durchlauf bei minimalem Mahlspalt. Danach Feinvermahlung auf einer Perlmühle (Glasperlen mit 1 mm Durchmesser) bis Komgrößenverteilung von d50 =1,3 - 3,5 µ. Anschließend wird die Komponente f) mittels Ystral-Dispermlx in die vermahlene Suspension eingerührt. Abschließend erfolgt die pH-Werteinstellung mittels Zitronensäure auf pH 3 und eine Kontrolle des Nass-Siebrückstandes.

### Verfahren zur Prüfung der Lagerstabilität (z.B. Beispiele 4 und 5, Tabelle 2):

Das Prüfverfahren zur Bestimmung der Lagerstabilität erfolgt durch Lagerung von 5-5000 g Proben der erfindungsgemäßen Formullerungen bei den in Tabelle 2 angegebenen Temperaturen und Lagerdauern. Die Wirkstoff-Analyse nach dieser Lagerung erfolgt durch dem Fachmann bekannte HPLC-Verfahren.

**Beschreibung der im Text und in den Beispielen verwendeten Handelsprodukte:**

| | |
|---|---|
| Glycerin 99%ig (1,2,3-Propan-triol) | (a) Erfindungsgemäßes Lösungsmittel |
| Glykol 99%lg (1,2-Propan-diol) | Alternative des Standes der Technik zum erfindungsgemäßen Lösungsmittel für Vergleichsversuch |
| Thiencarbazone (-methyl) | (b) Wirkstoff (Triazolo Herbizid), Bayer CropScience |
| Tembotrione | (b) Wirkstoff (Benzoylcyciohexandione Herbizid), Bayer CropScience |
| Isoxaflutole | (b) Wirkstoff (Isoxazole Herbizld), Bayer CropScience |
| lsoxadifen-ethyl | (b) Wirkstoff (Herbizid-Safener), Bayer CropScience |
| Cyprosulfamide | (b) Wirkstoff (Herbizid-Safener). Bayer CropScience |
| ®Monatrope 1620 (syn. AL 2575) | (c) Netzmittel (Alkylpolyglukoside), Uniqema |
| ®Atlox 4894 | (c) Netzmittel (Fettalkohol-ethoxylat, nonylphenolfrei, syn. POE-Alkylether), Uniqema |
| ®Dispersogen LFH | (d) Dispergiermittel (Tristyrylphenol-polyethylenglykolphosphorsäureester), Clariant |
| ®Atlox 4913 | (d) Dispergiermittel (Polyoxyethylenacrylsäure-Copolymerlösung in Propylenglykol),Uniqema |
| ®Rhodorsil 481 | (e) Antischaummittel (Polydimethylsiloxan/Kieselsäure), Rhodia |
| ®Rhodopol 23 | (f) Mittel zum Einstellen rheologischer Eigenschaften (Xanthan Derivat, Heteropolysaccharlde), Rhodia |
| ®Aerosil 200 | (f) Mittel zum Einstellen rheologischer Eigenschaften (Siliziumdioxid), Degussa |
| ®Kaolin W | (f) Mittel zum Einstellen rheologischer Eigenschaften (Aluminiumhydrosilikat), Erbslöh |
| Zitronensäure | (g) Säure zum Einstellen eines pH-Wertes zwischen 2,5 bis 4,5 |
| ®Proxel GXL | (h) Konservierungsmittel (Natriumsalz von 1,2-Benzisothiazol-3-(2H)on), Zeneca |
| ®Acticide MBS | (h) Konservierungsmittel (Mischung aus 2 Mathyl-2H-isothiazol-3-on und 1,2-Benzisothiazol-3-(2H)on), Thor Chemie |
| Ammoniumsulfat (techn.) | (i) Weitere Formullerungshilfsmittel (Düngemittel-Salz) |
| Wasser (entsalzt) | (k) Weiteres Lösungsmittel |

**Tabelle 1: Beispiele 1 -4 (Erfindungsgemäß) und 5 (Stand der Technik, analog US 2002/0065198 A1)**

| Komponente | Bezeichnung | Beispiel 1 [Gew.-%] | Beispiel 2 [Gew.-%] | Beispiel 3 [Gew.-%] | Beispiel 4 [Gew.-%] | Beispiel 5 [Gew.-%] |
|---|---|---|---|---|---|---|
| (a) | Glycerin 99%ig (1,2;3-Propan-triol) | 74,38 | 76,26 | 75,00 | 75.50 | - |
| Alternativ für (a) | Glykol 99%ig (1,2-Propan-diol) | - | - | - | - | 86,80 |
| (b) | Thiencarbazone (-methyl) | - | 0,79 | 1,64 | 1,62 | 1,67 |
| (b) | Tembotrione | 3,49 | 3,96 | - | - | - |
| (b) | Isoxaflutole | - | - | 4,13 | 4,14 | 4,17 |
| (b) | Isoxadifen-ethyl | 1,74 | - | - | - | - |
| (b) | Cyprosulfamide | - | 1,07 | 2,73 | 2,74 | 2,82 |
| (c) | ®Monatrope 1620 | 1,00 | 1,00 | - | - | - |
| (c) | ®Atlox 4894 | - | - | 1,00 | 1,00 | 1,00 |
| (d) | ®Dispersogen LFH | 3,00 | 3,00 | - | - | - |
| (d) | ®Atlox 4913 | -- | - | 3,00 | 3,00 | 3,00 |
| (e) | ®Rhodorsil 481 | 0,20 | 0,20 | 0,20 | - | 0,25 |
| (f) | ®Rhodopol 23 | 0,20 | 0,15 | - | - | - |
| (f) | ®Aerosil 200 | 0,10 | 0,10 | - | - | - |
| (f) | ®Kaolin W | - | - | 3,50 | - | - |
| (g) | Zitronensäure | 0,00¹⁾ | 0,00¹⁾ | 0.40²⁾ | - | - |
| (h) | ®Proxel GXL | 0,10 | 0,10 | 0,07 | - | - |
| (h) | ®Acticide MBS | - | - | - | 0,25 | 0,25 |
| (i) | Ammoniumsulfat (techn.) | 7,93 | 5,31 | - | - | - |
| (k) | Wasser (entsalzt) | add 100 | add 100 | add 100 | add 100 | add 100 |

| | | | | | | |
|---|---|---|---|---|---|---|
| Anmerkung: 1) Zitronensäure - monohydrat krist.; 2) Zitronensäure - wasserfrei | | | | | | |

Tabelle 1 zeigt Beispiele für die Zusammensetzungen erfindungsgemäßer Formulierungen (Beispiele 1-4), wobei Beispiel 5 eine am Stand der Technik orientierte Zusammensetzung aufweist. Der Effekt auf die Lagerstabilität ist in Tabelle 2 aufgeführt.

**Tabelle 2: Lagerstabilität anhand der Beispiele 4 (Erfindungsgemäß) und 5 (Stand der Technik)**

| Beispiel | Wirkstoff | Wirkstoffgehalt (% Abbau) bei einer Lagerdauer und -temperatur von: | | | |
|---|---|---|---|---|---|
| | | 0 Tage [Gew.- %] | 4 Wochen bei 40 °C [Gew.-%] | 8 Wochen bei 40 °C [Gew.-%] | 2 Wochen bei 54 °C [Gew.-%] |
| 4 (Erfindungsgemäß) | Thlencarbazone (-methyl) | 1,82 | - 1,54 (-5 %) | 1,54 (-5 %) | 1.30 (-20 %) |
| | Isoxaflutole | 4,14 | 4.03 (-3 %) | 4,07 (-2%) | 4,05 (-2 %) |
| | Cyprosulfamide | 2,74 | 2,71 | 2,75 | 2,79 |
| 5 (Stand der Technik) | Thiencarbazone (-methyl) | 1,67 | 1.53 (-8%) | 1,54 (-8%) | 1,05 (-37 %) |
| | Isoxaflutole | 4,17 | 3,56 (-15%) | 3,19(-24%) | 1,83 (-56%) |
| | Cyprosulfamide | 2,82 | 2,75 | 2,89 | 2,75 |

Die Ergebnisse in Tabelle 2 zeigen deutlich und überraschend, dass die erfindungsgemäßen Formulierungen (mit Glycerin als Komponente a) im Hinblick auf die allgemeine Lagerstabilität der Wirkstoffen den Formulierungen des Standes der Technik (mit Glykol als Alternative zu Komponente a) überlegen sind.

## Patentansprüche

1. Wirkstoffsuspension, enthaltend:
(a) mindestens 60 Gew.-% Glycerin,
(b) ein oder mehrere agrochemische Wirkstoffe,
(c) ein oder mehrere Netzmittel,
(d) ein oder mehrere Dispergiermittel,
(e) ein oder mehrere Antischaummittel,
und
(f) gegebenenfalls ein oder mehrere Mittel zum Einstellen rheologischer Eigenschaften,
(g) gegebenenfalls Säuren zum Einstellen eines pH-Wertes zwischen 2,5 bis 4,5,
(h) gegebenenfalls Konservierungsmittel (Biozide),
(i) gegebenenfalls weitere Formulierungshilfsmittel,
(j) gegebenenfalls weitere Tenside,
(k) gegebenenfalls weitere Lösungsmittel.

2. Wirkstoffsuspension nach Anspruch 1, enthaltend:
(a) 60 bis 90 Gew.%, bevorzugt 70 bis 85 Gew.-% Glycerin,
(b) 0,1 bis 30 Gew.-%, bevorzugt 5 bis 20 Gew.-% agrochemische Wirkstoffe,
(c) 0,1 bis 20 Gew.-%, bevorzugt 1 bis 5 Gew.-% Netzmittel.
(d) 0.1 bis 20 Gew.-%, bevorzugt 1 bis 5 Gew.-% Dispergiermittel,
(e) 0,02 bis 2 Gew.-%, bevorzugt 0,2 bis 1,5 Gew.-% Antischaummittel,
(f) 0 bis 7 Gew.%, bevorzugt 0,1 bis 4 Gew.% Mittel zum Einstellen rheologischer Eigenschaften,
(g) 0 bis 3 Gew.-%, bevorzugt 0,3 bis 1,5 Gew.% Säuren zum Einstellen eines pH-Wertes zwischen 2,5 bis 4,5,
(h) 0 bis 1 Gew.-%, bevorzugt 0,05 bis 0,4 Gew.-% Konservierungsmittel (Biozide),
(i) 0 bis 30 Gew.-%, bevorzugt 5 bis 15 Gew.-% weitere Formullerungshilfsmfttel,
(j) 0 bis 10 Gew.-% weitere Tenside,
(k) 0 bis 30 Gew.-%, bevorzugt 0 bis 20 Gew.-%, besonders bevorzugt 0 bis 13 Gew.-% weitere Lösungsmittel.

3. Wirkstoffsuspension nach Anspruch 1 oder 2, enthaltend:
(a) 65 bis 85 Gew.-% Glycerin,
(b) 0,1 bis 2 Gew.-% Sulfonamid-Herbizld, vorzugsweise Thiencarbazone(-methyl),
(b) 1 bis 10 Gew.-% Herbizid, vorzugsweise Tembotrione,
(b) 0,5 bis 8 Gew.-% Safener, vorzugsweise laoxadifen-ethyl,
(b) 0,5 bis 8 Gew.-% Safener, vorzugsweise Cyprosulfamide,
(c) 0,1 bis 8 Gew.-% Netzmittel, vorzugsweise ®Monatrope 1620 (AL2575),
(d) 0,3 bis 15 Gew.-% Dispergiermittel, vorzugsweise ®Dispersogen LFH,
(e) 0,1 bis 2 Gew.-% Antischaummittel, vorzugsweise ®Rhodorsil 481,
(f) 0,05 bis 3 Gew.-% Mittel zum Einstellen rheologischer Eigenschaften, vorzugsweise ®Rhodopol 23,
(f) 0,05 bis 3 Gew.-% Mittel zum Einstellen rheologischer Eigenschaften, vorzugsweise ®Aerosil 200,
(g) 0 bis 2 Gew.-% Säuren zum Einstellen eines pH-Wertes zwischen 2,5 bis 4,5, vorzugsweise Zitronensäure,
(h) 0 bis 1 Gew.-% Konservierungsmittel (Blozide), vorzugsweise ®Proxel GXL,
(i) 2 bis 10 Gew.% weitere Formulierungshilfsmittel, vorzugsweise Ammoniumsulfat (techn.),
(k) 0 bis 13 Gew.-% weitere Lösungsmitteln vorzugsweise Wasser (entsalzt).

4. Wirkstoffsuspension nach Anspruch 1 oder 2, enthaltend:
(a) 75 bis 90 Gew.-% Glycerin,
(b) 0,5 bis 3 Gew.-% Suffonamid-Herbizld, vorzugsweise Thiencarbazone(-methyl),
(b) 1 bis 10 Gew.-% Herbizid, vorzugsweise lsoxaflutole,
(b) 0,5 bis 10 Gew.-% Safener, vorzugsweise Cyprosulfamide,
(c) 0,1 bis 8 Gew.-% Netzmittel, vorzugsweise ®Atlox 4894,
(d) 0,3 bis 15 Gew.-% Dispergiermittel, vorzugsweise ®Atlox 4913,
(e) 0 bis 2 Gew.-% Antischaummittel, vorzugsweise ®Rhodorsil 481,
(f) 0 bis 7 Gew.-% Mittel zum Einstellen rheologischer Eigenschaften, vorzugsweise ®Kaolin W,
(g) 0 bis 2 Gew.-% Säuren zum Einstellen eines pH-Wertes zwischen 2,5 bis 4,5, vorzugsweise Zitronensäure,
(h) 0 bis 1 Gew.-% Konservierungsmittel (Biozide), vorzugsweise ®Proxel GXL,
(h) 0 bis 1 Gew.-% Konservierungsmittel (Biozide), vorzugsweise ®Acticide MBS,
(k) 0 bis 13 Gew.-% weitere Lösungsmitteln vorzugsweise Wasser (entsalzt).

5. Verfahren zur Herstellung einer Wirkstoffsuspension gemäß einem oder mehreren der Ansprüche 1 bis 4, worin die einzelnen Komponenten in den jeweiligen, herstellungsbedingten Mengenverhältnissen zusammengebracht werden und wobei immer Glycerin mit 60 bis 90 Gew.-%. bevorzugt 70 bis 85 Gew.-% bezogen auf das Gesamtgewicht der Formulierung, vorgelegt wird.

6. Agrochemisches Mittel, vorzugsweise mit Wirkstoffen (Komponente b) aus der Gruppe der Herbizide, Safener, Insektizide und Fungizide, enthaltend eine Wirkstoffsuspension nach einem der Ansprüche 1 bis 4.

7. Wässriges agrochemisches Mittel erhältlich durch Verdünnung einer Wirkstoffsuspension nach einem der Ansprüche 1 bis 4 oder eines agrochemischen Mittels nach Anspruch 6 mit Wasser.

8. Verfahren zur Bekämpfung von schädlichen Organismen bei dem eine Wirkstoffsuspension nach einem der Ansprüche 1 bis 4 oder ein agrochemisches Mittel nach Anspruch 6 oder 7 auf die schädlichen Organismen oder in deren Lebensraum appliziert wird, wobei Verfahren zur therapeutischen Anwendung bei Mensch und Tier dabei ausgeschlossen sind.

9. Verwendung einer Wirkstoffsuspension nach einem der Ansprüche 1 bis 4 oder eines agrochemischen Mittels nach Anspruch 6 oder 7 zur Bekämpfung von schädlichen Organismen, wobei eine therapeutische Anwendung bei Mensch und Tier ausgeschlossen ist.

10. Herbizides Mittel mit Wirkstoffen (Komponente b) aus der Gruppe der Herbizide und Safener enthaltend eine Wirkstoffsuspension nach einem der Ansprüche 1 bis 4.

11. Wässriges herbizides Mittel erhältlich durch Verdünnung einer Wirkstoffsuspension nach einem der Ansprüche 1 bis 4 oder eines herbiziden Mittels nach Anspruch 10 mit Wasser.

12. Verfahren zur Bekämpfung von unerwünschtem Pflanzenwuchs bei dem eine Wirkstoffsuspension nach einem der Ansprüche 1 bis 4 oder ein herbizides Mittel nach Anspruch 10 oder 11 auf die Schadpflanzen, Pflanzentelle, Pflanzensamen oder die Fläche auf der die Pflanzen wachsen appliziert wird.

13. Verwendung einer Wirkstoffsuspension nach einem der Ansprüche 1 bis 4 oder eines herbiziden Mittels nach Anspruch 10 oder 11 zur Bekämpfung von unerwünschtem Pflanzenwuchs.
